(19) **Europäisches Patentamt / European Patent Office / Office européen des brevets**

(11) **EP 3 515 082 B1**

(12) **EUROPEAN PATENT SPECIFICATION**

(45) Date of publication and mention
of the grant of the patent:
**13.05.2020 Bulletin 2020/20**

(51) Int Cl.:
*H04N 21/2343* (2011.01)     *H04N 19/597* (2014.01)
*H04N 19/167* (2014.01)

(21) Application number: **18152612.0**

(22) Date of filing: **19.01.2018**

(54) **SERVER DEVICE FOR STREAMING VIDEO CONTENT AND CLIENT DEVICE FOR RECEIVING AND RENDERING VIDEO CONTENT**

SERVERVORRICHTUNG ZUM STREAMING VON VIDEOINHALT UND CLIENT-VORRICHTUNG ZUR AUFNAHME UND WIEDERGABE VON VIDEOINHALT

DISPOSITIF DE SERVEUR POUR DIFFUSER UN CONTENU VIDÉO ET DISPOSITIF CLIENT POUR RECEVOIR ET RENDRE UN CONTENU VIDÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.07.2019 Bulletin 2019/30**

(73) Proprietor: **Nokia Technologies Oy
02610 Espoo (FI)**

(72) Inventors:
• **RONDAO ALFACE, Patrice
2018 Antwerp (BE)**
• **MACQ, Jean-François
2018 Antwerp (BE)**
• **GOSEZ, Alexis
2018 Antwerp (BE)**

(74) Representative: **MERH-IP Matias Erny Reichl Hoffmann
Patentanwälte PartG mbB
Paul-Heyse-Strasse 29
80336 München (DE)**

(56) References cited:
**WO-A1-2016/191702**

• **PATRICE RONDAO ALFACE ET AL: "Interactive Omnidirectional Video Delivery: A Bandwidth-Effective Approach", BELL LABS TECHNICAL JOURNAL, vol. 16, no. 4, 1 March 2012 (2012-03-01), pages 135-147, XP055034585, ISSN: 1089-7089, DOI: 10.1002/bltj.20538**
• **KARAN SINGH, RAVIN BALAKRISHNAN: "Visualizing 3D Scenes using Non-Linear Projections and Data Mining of Previous Camera Movements", PROCEEDING AFRIGRAPH '04 PROCEEDINGS OF THE 3RD INTERNATIONAL CONFERENCE ON COMPUTER GRAPHICS, VIRTUAL REALITY, VISUALISATION AND INTERACTION IN AFRICA, 3 November 2004 (2004-11-03), - 5 November 2004 (2004-11-05), pages 41-48, XP040011327,**

EP 3 515 082 B1

**Description**

Field of Invention

The field of the invention relates to a server device and a client device for streaming video content. Particular embodiments relate to a server device for streaming video content and a cooperating client device for receiving the video content.

Background

Immersive video experiences enable a user to view a scene from different angles and positions for example with a head-mounted display (HMD). Problems may arise when streaming ultra-high resolution 360° or panoramic video content of that scene to a client device which cannot ingest this content totally due to bandwidth limitations or limited processing capabilities at the client device side.

Compared to traditional video streaming approaches, streaming panoramic video content for immersive video applications may encounter following difficulties.

Only a portion of the 360° video can be seen in the HMD, this is called a viewport or field of view and is typically approximately 90° degrees wide. Accordingly most of the area of the 360° video is not seen or watched by the user. This means that sending the 360° content in 4K resolution, merely results in lower than high definition (HD) resolution in the viewport or field of view area, which is considered to be a significant waste of pixels and bandwidth.

Moreover, the position of the field of view changes in dependency of the user and that position might move quite rapidly. Therefore, this position needs to be known at the server device side in order to be able to optimize encoding for this portion of the 360° video content.

Prior art approaches stream the full 360° video content in 4K resolution by encoding the content as a simple video after the 360° content is mapped on a plane by means of an equirectangular projection. However, this results in a very low resolution for the content in the field of view of the user of the HMD which leads to pixelated visual experiences. This significantly impacts the quality of experience of the user and the feeling of immersion in a negative manner.

Besides the basic 360° video streaming through full panorama streaming, prior art approaches have proposed to improve the transmission by maximizing the resolution of the video in the area of the field of view or viewport. These prior art approaches mainly differ in the transmission protocol chosen. Examples include Hypertext Transfer Protocol (HTTP) Adaptive Streaming (HAS) or Region Of Interest (ROI) direct streaming via Real-time Transport Protocol (RTP). These two classes of prior art approaches exhibit different magnitudes of latency that impact the video encoding negatively in a different manner. Hence, in HAS the client device pulls the tiles that are needed to cover a large area around the viewport position, and in addition a low resolution tile that covers the entire 360° sphere. This leads to a user seeing a pixelated field of view when moving away from his or her initial position. Meanwhile several high resolution tiles have been downloaded which do not cover the correct portion of the sphere which is seen by the viewer. In a similar manner, ROI direct streaming approaches send low resolution full 360° content to enable a fallback or safety net in case the user would move too fast away from the known viewport position. Therefore these prior art approaches result in a waste of bandwidth and a high risk of the user falling back on a pixelated viewport.

XP055034585, Patrice Rondao Alface et al: "Interface Omnidirectional Video Delivery: A Bandwidth-Effective Approach" Bell Labs Technical Journal, Vol.16, no. 4, 1 March 2012, Pages 135-147, discloses prior art scenarios for tile-based viewport streaming. Only the tiles corresponding to a requested viewport are encoded.

Summary

The object of embodiments is to provide a server device for streaming video content and a client device for receiving and rendering video content which alleviate at least one of the above described difficulties as encountered in the prior art. More in particular, the object of embodiments is to provide a server device and a cooperating client device which allow to stream video content in a way such that less bandwidth is required and/or to stream video content in a way which results in an improved quality of images at the client device side and in an improved quality of experience for the user.

According to a first aspect there is provided a server device for streaming encoded video content to a client device, the server device comprising:

- a video image obtaining unit configured to obtain from the video content a video image;
- an information receiving unit configured to receive field of view command information from the client device;
- a determining unit configured to determine a field of view based on the field of view command information, and to generate field of view metadata regarding the determined field of view;

- an extracting unit configured to extract a field of view image from the obtained video image based on the determined field of view;
- an encoding unit configured to encode the extracted field of view image;
- a decoding unit configured to decode the encoded field of view image;
- a combination unit configured to determine a combination image by combining the decoded field of view image with a hitherto accumulated client panorama image;
- a storing unit configured to store the determined combination image as an updated hitherto accumulated client panorama image; and
- a sending unit configured to send the encoded field of view image and the generated field of view metadata to the client device.

According to a second aspect, there is provided a client device for receiving encoded video content from a server device, the client device comprising:

- a sending unit configured to send field of view command information to the server device;
- a receiving unit configured to receive an encoded field of view image and generated field of view metadata from the server device;
- a decoding unit configured to decode the encoded field of view image;
- a combination unit configured to determine a combination image by combining the field of view image with a hitherto accumulated client panorama image based on the generated field of view metadata;
- a storing unit configured to store the determined combination image as an updated hitherto accumulated client panorama image; and
- a rendering unit configured to render the determined combination image.

Embodiments are based *inter alia* on the insight that by sending the encoded field of view image and the generated metadata in stead of sending an entire 360° panorama image of a scene, less bandwidth is required for communication between de server device and the client device. Moreover, this allows for the field of view image to be encoded in a better quality as compared to prior art approached and allows for the encoded field of view image to be sent with a higher resolution. In this manner, the quality of experience of a user is improved. In addition, by storing an hitherto accumulated client panorama image, and updating this hitherto accumulated client panorama image based on the extracted field of view image, the server device can keep track of which information regarding the scene is available at the client device. This is achieved by the fact that the server device functions in a "closed loop" manner wherein the extracted field of view image are consecutively encoded and decoded to simulate the decoding action of the client device. The hitherto accumulated client panorama image corresponds with a 360° panorama image which is available at the client device, and is composed by combining high quality or high definition field of view images which have been provided to the client device by the server device. These high definition field of view images are determined at the server side based on field of view command information which is received from the client device side. In other words, a user of the client device will indicate indirectly by means of his or her behaviour, which field of views and corresponding field of view images will be used to further improve the hitherto accumulated client panorama image which is currently stored. In other words, relatively small high quality field of view images are used to fill or "paint" the relatively large client panorama image. In this manner, if a user would look in a direction other than the most recently determined field of view, the user will see a previously obtained high quality image which has been seen by the user at a previous point in time, in stead of a pixelated, low quality section of a panorama image which was encoded and sent in 4K. Especially, when the video content comprises a sequence of video images regarding a substantially static panorama, with optionally one or more moving objects within the substantially static panorama, the above described server device and client device will, in cooperation, allow for a better image quality at the client device side, while lowering the amount of bandwidth used. In other words, proposed embodiments will demonstrate clear advantages over prior art approaches, especially regarding applications which use one or more fixed video cameras.

In an embodiment, the client device further comprising a comparison unit configured to compare the extracted field of view image with a corresponding section of the hitherto accumulated client panorama image, and to determine an adapted field of view image based on a difference between the extracted field of view image and the corresponding section of the hitherto accumulated client panorama image. In this embodiment, the encoding unit is configured to encode the adapted field of view image; the decoding unit is configured to decode the encoded adapted field of view image; the combination unit is configured to determine a combination image by combining the decoded adapted field of view image with the hitherto accumulated client panorama image; the storing unit is configured to store the determined combination image as an updated hitherto accumulated client panorama image; and the sending unit is configured to send the encoded adapted field of view image and the generated field of view metadata to the client device. In this manner, bandwidth can be used in an efficient manner since the server device is aware of the client panorama image which is stored at the client device. In stead of encoding the extracted field of view image, encoding the adapted field of view image, which may correspond to a differential field of view image, allows for a more efficient use of bandwidth.

In another embodiment, the field of view corresponds with a section of the obtained video content which section is viewable by a user of the client device, and wherein the determining unit is configured to determine at least one of a position and size of the field of view relative to the obtained video content. In this manner, a selection can be made from within the video image which selection represents the most important section from within the video image since this is the section which is to be viewed by the user of the client device. The server device may receive field of view command information which is representative for at least one of the behaviour, movement, and viewing direction of the user. Based on this information, and taking into account the available video image, a required size and/or position of the field of view relative to the dimension of the video image can be determined. It is clear to the skilled person that depending on case specific settings or preferences it can be determined that a size of the field of view either corresponds exactly with the section of the scene which is viewable by the user, or either is chosen to be a bit larger as compared to the section of the scene which is viewable by the user such that a safety zone is taken into account, such that a user still is able to view high quality content when he or she looks in another directions which is slightly different from the initial viewing direction based on which the field of view command data was generated and send to the server device.

In a preferred embodiment, the determining unit is configured to estimate at least one of a position and size of the field of view based on at least one of the received field of view command information, at least one position and/or size of one or more previously determined field of views, and an estimated movement of a user of the client device; and to generate field of view metadata regarding the estimated position and/or size of the field of view. In this manner, the server device can estimate a size and/or position of a future field of view in order to correct for a delay occurring between the sending of the field of view command information and the sending of the corresponding encoded field of view image. In further exemplary embodiments, estimating the size and/or position of the field of view may be based on or predicted by previously obtained field of views, viewports, previously detected user activity, story telling aspects, and/or by means of a Kalman filter, spline-based curve fitting, etc.

In another possible embodiment, the server device further comprises:

- a segmentation unit configured to divide the obtained video image and the hitherto accumulated client panorama image in corresponding segments, such that for each segment in the video image a corresponding segment is present in the hitherto accumulated client panorama image;
- a segment comparing unit configured to compare corresponding segments and to determine a segment similarity; and
- a segment correcting unit configured to perform a correction to the respective segment in the hitherto accumulated client panorama image if the corresponding segment similarity is below a predefined similarity threshold. In this embodiment, the encoding unit is configured to encode the correction to the respective segment; the decoding unit is configured to decode the encoded correction to the respective segment; the combination unit is configured to determine the combination image by performing the decoded correction to the respective segment in the hitherto accumulated client panorama image; and the sending unit is configured to send the encoded correction to the client device. In this manner, the server device can take into account changes that might arise in the substantially static panoramic scene. Changes in (parts of) the panoramic scene may occur locally and/or globally and can for example be caused by moving objects within the panoramic scene, or by changing light conditions such as moving clouds in an outdoor panoramic scene. By determining which segments of the currently obtained video image correspond with segments of the previously constructed hitherto accumulated client panorama image, and comparing corresponding segments, it can be determined at the server device side that a correction is needed. Since both the server device and the client device, due to the closed loop functionality, are aware of the currently available hitherto accumulated client panorama image, it suffices for the server to encode the correction to be carried out and send this encoded correction to the client device, which results in an efficient use of bandwidth. The encoded correction may comprise an actual correction to be performed and some metadata indicating for example to which segment the correction should be applied.

In a further developed embodiment, the segment correcting unit is configured to perform the correction to the respective segment by replacing the segment of the hitherto accumulated client panorama image with the corresponding segment of the video image when the determined segment similarity is below a predefined replacement threshold. In this embodiment, the encoding unit is configured to encode the corresponding segment of the video image; the decoding unit is configured to decode the encoded corresponding segment of the video image; the combination unit is configured to determine the combination image by including the decoded corresponding segment of the video image in the hitherto accumulated client panorama image; and the sending unit is configured to send the encoded corresponding segment of the video image to the client device. In this manner, relatively big differences between corresponding segments in the hitherto accumulated client panorama image and the currently obtained video image can be corrected for. These relatively big differences which cause the segment similarity to be below a replacement threshold may be caused by for example a moving object which passes through the respective segment. By replacing the respective segment of the hitherto accumulated client panorama image by the corresponding segment of the currently obtained video image, the hitherto accumulated client panorama image can be updated in an efficient way. In an alternative embodiment, in stead of encoding the entire corresponding segment of the video image, a differential image which corresponds with the difference between the segment in the hitherto accumulated client panorama image and the corresponding segment in the obtained video image may be encoded. However, since the difference between both segments is relatively big by definition, this approach might not be beneficial in terms of required bandwidth.

In another embodiment, the segment correcting unit is configured to perform the correction to the respective segment by performing a color correction to the segment of the hitherto accumulated client panorama image when the determined segment similarity is below a predefined color threshold; the encoding unit is configured to encode the color correction to the respective segment; the decoding unit is configured to decode the encoded color correction to the respective segment; the combination unit is configured to determine the combination image by performing the decoded color correction to the respective segment in the hitherto accumulated client panorama image; and the sending unit is configured to send the encoded color correction to the client device. In this manner, relatively small differences between corresponding segments in the hitherto accumulated client panorama image and the currently obtained video image can be corrected for. These relatively small differences which cause the segment similarity to be below a color threshold may be caused by for example a change in lighting conditions within the respective segment. By performing a color correction to the respective segment of the hitherto accumulated client panorama image by the corresponding segment of the currently obtained video image, the hitherto accumulated client panorama image can be updated in an efficient way. The color correction may be performed and encoded in different manners, which will be further elaborated below.

In a further developed embodiment, the segment correcting unit is configured to perform a color correction to the respective segment by determining a color correction matrix such that multiplication of the respective segment with said color correction matrix results in a corrected respective segment; the encoding unit is configured to encode the determined color correction matrix; the decoding unit is configured to decode the encoded color correction matrix; the combination unit is configured to determine the combination image by multiplying the respective segment with the decoded color correction matrix in the hitherto accumulated client panorama image; and the sending unit is configured to send the encoded color correction matrix to the client device. In this manner, a color correction can be carried through efficiently by means of a matrix multiplication. Moreover, color correction matrices allow for efficient encoding and efficient use of bandwidth.

It will be understood by the skilled person that the features and advantages disclosed hereinabove with respect to various embodiments of the server device may also apply, *mutatis mutandis,* to various embodiments of the client device as described below.

In an embodiment, the encoded field of view image is an adapted field of view image and wherein the combination unit is configured to determine a combination image by combining the adapted field of view image with the hitherto accumulated client panorama image based on the generated field of view metadata.

In another embodiment, the receiving unit is configured to receive an encoded correction from the server device; the decoding unit is configured to decode the encoded correction; and the combination unit is configured to determine the combination image by performing the decoded correction to the respective segment in the hitherto accumulated client panorama image.

In a preferred embodiment, the receiving unit is configured to receive an encoded corresponding segment of the video image from the server device; the decoding unit is configured to decode the encoded corresponding segment of the video image; and the combination unit is configured to determine the combination image by including the decoded corresponding segment of the video image in the hitherto accumulated client panorama image representing the scene.

In another possible embodiment, the receiving unit is configured to receive an encoded color correction from the server device; the decoding unit is configured to decode the encoded color correction; and the combination unit is configured to determine the combination image by performing the decoded color correction to the respective segment in the hitherto accumulated client panorama image.

In a further developed embodiment, the receiving unit is configured to receive an encoded color correction matrix from the server device; the decoding unit is configured to decode the encoded color correction matrix; and the combination unit is configured to determine the combination image by multiplying the respective segment with the decoded color correction matrix in the hitherto accumulated client panorama image.

According to another aspect of the present invention, there is provided a video streaming assembly comprising a server device cooperating with a client device according to any one of the above described embodiments.

It will be understood by the skilled person that the features and advantages disclosed hereinabove with respect to various embodiments of the server device and various embodiments of the client device may also apply, *mutatis mutandis,* to various embodiments of the video streaming assembly.

According to another aspect of the present invention, there is provided a server for streaming encoded video content to a client, the server comprising:

- at least one processor; and
- at least one memory including computer program code;
- the at least one memory and the computer program code configured to, with the at least one processor, cause the server at least to perform:

  - obtain from the video content a video image;
  - receive field of view command information from the client;
  - determine a field of view based on the field of view command information, and generate field of view metadata regarding the determined field of view;
  - extract a field of view image from the obtained video image based on the determined field of view;
  - encode the extracted field of view image;
  - decode the encoded field of view image;
  - determine a combination image by combining the decoded field of view image with a hitherto accumulated client panorama image;
  - store the determined combination image as an updated hitherto accumulated client panorama image; and
  - send the encoded field of view image and the generated field of view metadata to the client device.

According to another aspect of the present invention, there is provided a client for receiving encoded video content from a server, the client comprising:

- at least one processor; and
- at least one memory including computer program code;
- the at least one memory and the computer program code configured to, with the at least one processor, cause the client at least to perform:
- send field of view command information to the server;
- receive an encoded field of view image and generated field of view metadata from the server;
- decode the encoded field of view image;
- determine a combination image by combining the field of view image with a hitherto accumulated client panorama image based on the generated field of view metadata;
- store the determined combination image as an updated hitherto accumulated client panorama image; and
- render the determined combination image.

It will be understood by the skilled person that the features and advantages disclosed hereinabove with respect to various embodiments of the server device and various embodiments of the client device may also apply, *mutatis mutandis,* to various embodiments of the server and client. More in particular, it is clear to the skilled person that functionality of the units of the server device and client device can be performed in a similar way by the processor, memory and computer program code of the corresponding server and client, respectively.

According to another aspect of the present invention, there is provided a method for streaming encoded video content to a client, the method comprising the steps of:

- obtaining from the video content a video image;
- receiving field of view command information from the client;
- determining a field of view based on the field of view command information, and generating field of view metadata regarding the determined field of view;
- extracting a field of view image from the obtained video image based on the determined field of view;
- encoding the extracted field of view image;
- decoding the encoded field of view image;
- determining a combination image by combining the decoded field of view image with a hitherto accumulated client panorama image;
- storing the determined combination image as an updated hitherto accumulated client panorama image; and
- sending the encoded field of view image and the generated field of view metadata to the client device.

It will be understood by the skilled person that the features and advantages disclosed hereinabove with respect to various embodiments of the server device may also apply, *mutatis mutandis,* to various embodiments of the method for streaming encoded video content.

According to another aspect of the present invention, there is provided a method for receiving and rendering encoded video content from a server, the method comprising the steps of:

- sending field of view command information to the server;
- receiving an encoded field of view image and generated field of view metadata from the server;
- decoding the encoded field of view image;
- determining a combination image by combining the field of view image with a hitherto accumulated client panorama image based on the generated field of view metadata;
- storing the determined combination image as an updated hitherto accumulated client panorama image; and
- rendering the determined combination image.

It will be understood by the skilled person that the features and advantages disclosed hereinabove with respect to various embodiments of the client device may also apply, *mutatis mutandis,* to various embodiments of the method for receiving and rendering encoded video content.

Further aspects are described by the dependent claims.

Brief description of the figures

The accompanying drawings are used to illustrate presently preferred non-limiting exemplary embodiments of devices. The above and other advantages of the features and objects will become more apparent and the proposed subject-matter will be better understood from the following detailed description when read in conjunction with the accompanying drawings, in which:

Figure 1A schematically illustrates an embodiment of a server device for streaming video content;
Figure 1B schematically illustrates a further embodiment of a server device for streaming video content;
Figure 2 schematically illustrates another embodiment of a server device for streaming video content;
Figure 3 schematically illustrates an embodiment of a client device for receiving streamed video content;
Figure 4A is a flowchart of an embodiment of a method for streaming video content;
Figure 4B is a flowchart of a further embodiment of a method for streaming video content;
Figure 5 is a flowchart of another embodiment of a method for streaming video content;
Figure 6 is a flowchart of an embodiment of a method for receiving encoded video content;
Figure 7 schematically illustrates how a hitherto accumulated client panorama image may be determined;
Figure 8 schematically illustrates a further developed embodiment of a server device for streaming video content;
Figure 9 schematically illustrates a further developed embodiment of a client device for receiving streamed video content;
Figure 10 schematically illustrates how different segments of a panorama image may be corrected;
Figure 11 schematically illustrates a further developed embodiment of a server device for streaming video content; and
Figure 12 schematically illustrates a further developed embodiment of a client device for receiving streamed video content.

Description of embodiments

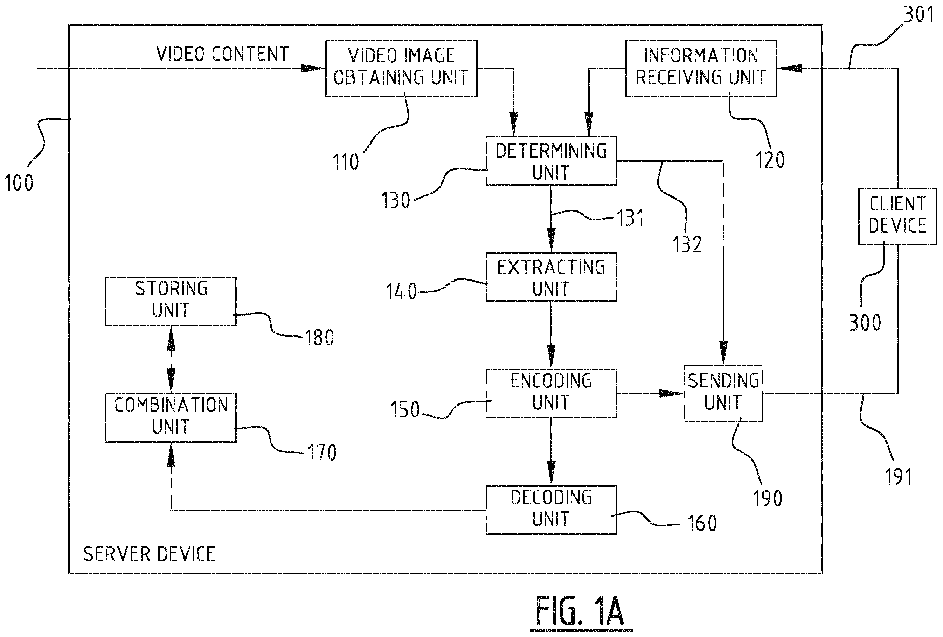

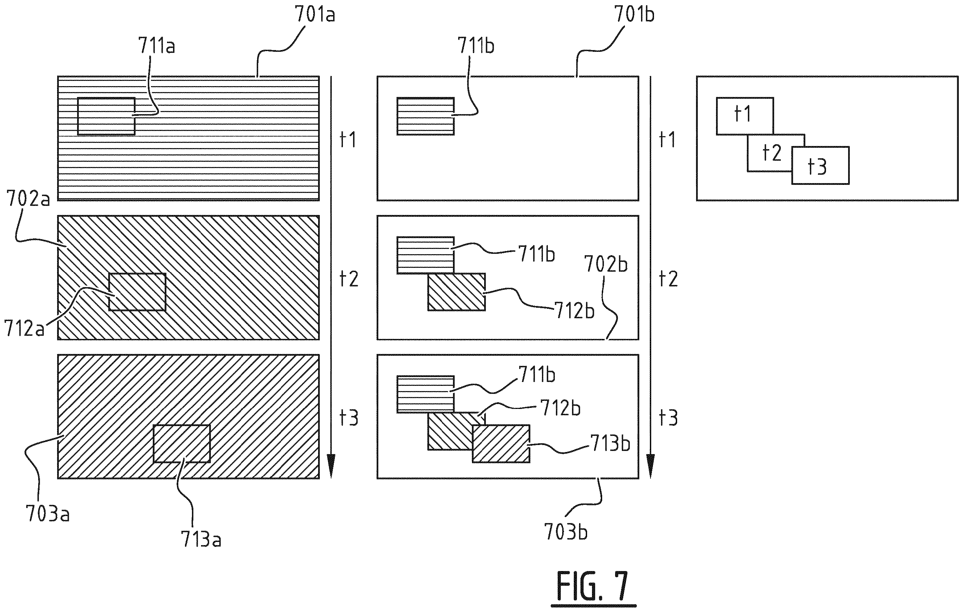

Figure 1A schematically illustrates an embodiment of a server device 100 for streaming video content. More in particular, figure 1A illustrates a server device 100 for streaming encoded video content regarding a scene to a client device 300. In preferred embodiments the video content comprises a sequence of video images regarding a scene comprising a substantially static panorama and, optionally, one or more moving objects within the substantially static panorama. The video content may for example comprise a 360° panoramic scene captured by a fixed video camera, wherein moving objects may occur. The server device 100 comprises a video image obtaining unit 110 configured to obtain from the video content a video image representing the scene. The video image corresponds with a frame of the video content. The server device 100 comprises an information receiving unit 120 configured to receive field of view command information 301 from the client device 300. When the client device 300 is a HMD, the field of view command information may comprise client command data being indicative for the orientation of the HMD, the view direction or a line of sight of the user of the HMD, etc. The obtained video image is input to a determining unit 130 together with the received field of view command information 301, where the determining unit 130 determines a field of view based on the field of view command information 301. The field of view corresponds with a section of the obtained video content which section is viewable by a user of the client device 300. The functionality of the determining unit 130 is to determine the size and/position of the field of view relative to the obtained video content. In other words, based on the received field of view command information from the client device 300, the determining unit 130 determines which part or section of the obtained video image, e.g. 360° image, falls within the field of view of the user of the client device 300. The determining unit 130 may determine an outline of this field of view with respect to the obtained video image, by determining a size and/or position of the field of view. The determining unit 130 also generates field of view metadata, which is representative for the size and/or position of the determined field of view within the larger context of the obtained video image. In a further developed preferred embodiment, the determining unit 130 is configured to estimate the position and/or size of the field of view based on information in addition to the received field of view command information. This additional information may comprise at least one position and/or size of one or more previously determined field of views, an estimated movement of the user of the client device 300, user activity, story telling aspects, etc. Consequently, the determining unit 130 may generate field of view metadata regarding the estimated position and/or size of the field of view. In addition to estimating the field of view, the determining unit 130 may further estimate an uncertainty regarding the estimated field of view by means of for example Kalman filters, spline-based curve fitting and the like. The estimated uncertainty can be used to define a safety region around the estimated field of view. For example, when the uncertainty regarding an estimated field of view is large, the determining unit 130 may determine the field of view to comprise a large safety region around the estimated field of view. This means that in addition to the estimated field of view, also the large safety region is taken into account when extracting actual content for the determined or estimated field of view. The extracting unit 140 is configured to extract a field of view image from the obtained video image based on the determined or estimated field of view outline 131, which might or might not include a safety region as described above. The extracting unit 140 matches the determined or estimated field of view 131 with the obtained video image and determines which content to include in the field of view image. Since this field of view image is considered to be the content which is the most likely to be viewed by the user of the client device 300, this extracted field of view image will be encoded in high quality before being sent to the client device 300. This is done by encoding unit 150 and sending unit 190, respectively, which does not only send the encoded field of view image to the client device 300 but also the generated field of view metadata. The metadata allows for the client device 300 to identify to which part of a hitherto accumulated client panorama image the field of view image corresponds. This hitherto accumulated client panorama image is an image having the same dimensions as the obtained video image, and which is built by positioning the determined high quality field of view images within the panorama image based on the corresponding generated metadata. In other words, in stead of encoding and sending one large panorama image in 4K, which would lead to lower than HD resolution for an actual field of view, the server device and client device each build a panorama image comprising of multiple high resolution field of view images. This client panorama image is said to be hitherto accumulated because it is constituted by previously determined field of view images.. This will be further elaborated in connection to figure 7. As described above, the client device 300 builds, accumulated or "paints" a client panorama image by consecutively updating the predetermined panorama image based on newly received field of view images. However, the server device 100 also generates this client panorama image, independently from the client device 300, in order to be aware of the generated panorama image at the client device side 300. More in particular, in addition to being sent to the client device 300, the encoded field of view image is decoded within the decoding unit 160 of the server device 100, and consequently the decoded field of view image combined with the hitherto accumulated client panorama image in the combination unit 170. The hitherto accumulated client panorama image is stored in the storing unit 180 and corresponds with the client panorama image or client panorama frame as built at the client device 300. The feature that both the server device 100 and the client device 300, independently from each other, generate and update the hitherto accumulated client panorama image allows for the server device 100 to send high quality encoded field of view images and for the client device 300 to further built, paint, combine or update the entire hitherto accumulated client panorama image based on the high quality encoded field of view images and their corresponding metadata.

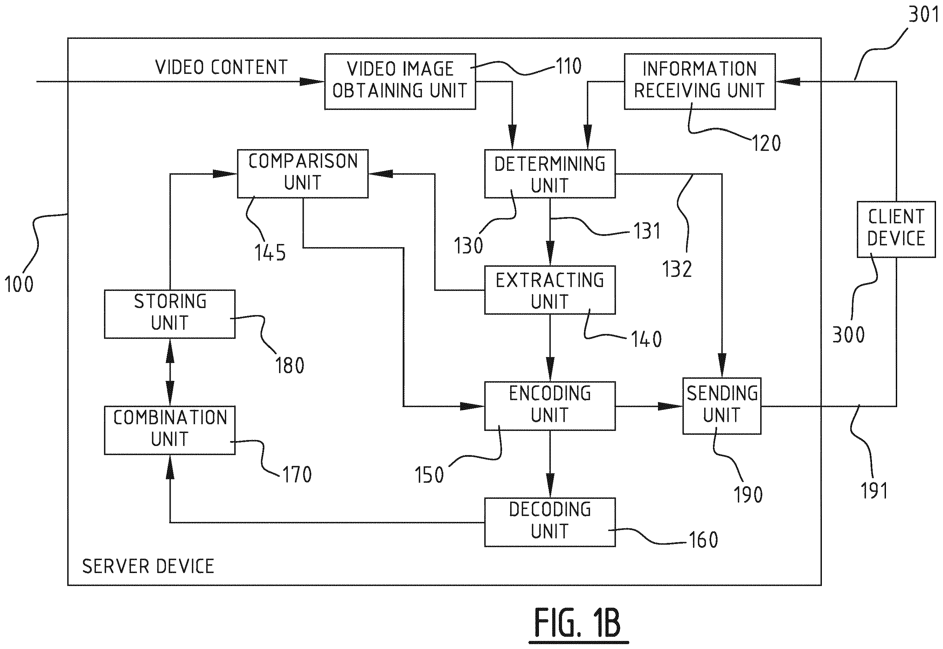

Figure 1B schematically illustrates a further embodiment of a server device 100 for streaming video content, wherein, in addition to the embodiment according to figure 1A, the server device 100 further comprises a comparison unit 145 which is configured to compare the extracted field of view image from the extracting unit 140 with a corresponding section of the hitherto accumulated client panorama image representing the scene which is stored in the storing unit 180 and which is determined based on previously extracted field of view images as described above. The comparison unit 145 is further configured to determine an adapted field of view image based on a difference between the extracted field of view image and the corresponding section of the hitherto accumulated client panorama image. The adapted field of view image may for example be a differential field of view image, which is representative for the difference between the extracted field of view image and the corresponding section of the hitherto accumulated client panorama image. In this manner, only the differential image need to be encoded and send to the client device 300, which results in a more efficient use of bandwidth, especially when the difference between both images is small. When the extracted field of view image corresponds with a field of view which had not yet been viewed by the user of the client device 300, the differential field of view image would be equal to the extracted field of view image because the section of the hitherto accumulated client panorama image which corresponds to the newly extracted field of view image would be empty. In this embodiment, the encoding unit 150 is configured to encode the adapted field of view image, the decoding unit 160 is configured to decode the encoded adapted field of view image and the combination unit is configured to determine a combination image by combining the decoded adapted field of view image with the hitherto accumulated client panorama image representing the scene. Furthermore, the storing unit 180 is configured to store the determined combination image as an updated hitherto accumulated client panorama image the sending unit 190 is configured to send the encoded adapted field of view image 191 and the generated field of view metadata 191 to the client device 300.

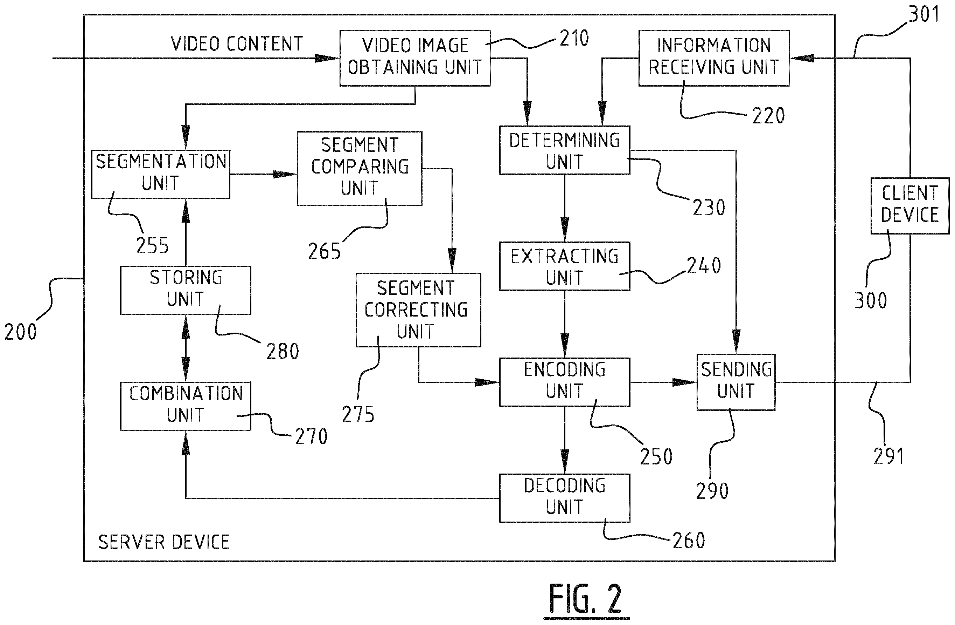

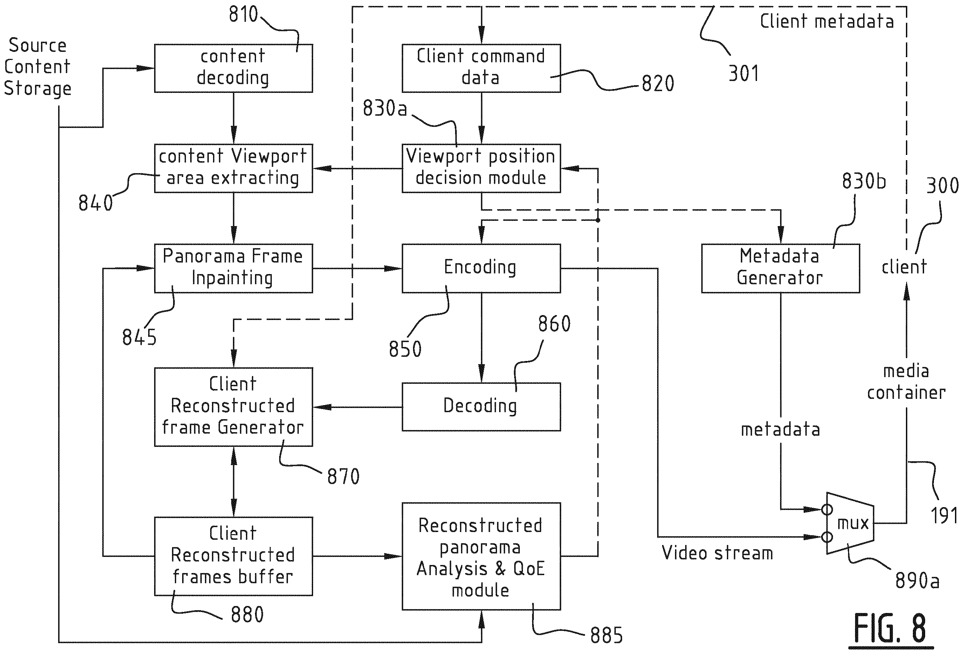

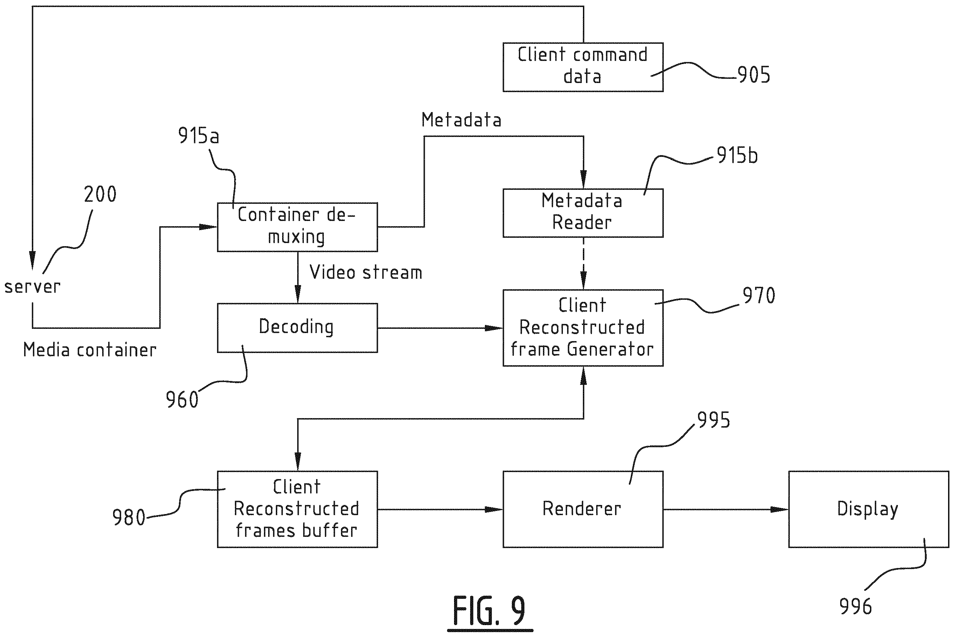

Figure 2 schematically illustrates another embodiment of a server device 200 for streaming video content, wherein the server device 200, in addition to the server device 100 of figure 1A, further comprises a segmentation unit 255, a segment comparing unit 265 and a segment correcting unit 275. Although it is not illustrated in figure 2, the server device 200 may further comprise a comparison unit 145 as illustrated in figure 1B. In figure 2, the segmentation unit 255 is configured to divide the obtained video image and the hitherto accumulated client panorama image in corresponding segments, such that for each segment in the video image a corresponding segment is present in the accumulated panorama image. The segmentation unit 255 may for example employ a motion estimation technique to find corresponding pairs of segments in both images. When corresponding segments have been identified, the segment comparing unit 265 will compare corresponding segments and will determine a segment similarity based on the differences between corresponding segments, if any. In other words, if hardly any difference is found, corresponding segments are considered to have a high segment similarity. If a lot of differences are found, corresponding segments are considered to have a low segment similarity. It is clear to the skilled person that the definition of a low and/or a high segment similarity may vary from one specific application to another. Consequently, the segment correcting unit 275 is configured to perform a correction to the respective segment in the accumulated panorama image if the corresponding segment similarity is below a predefined similarity threshold. This similarity threshold may be arbitrarily chosen in dependence of the specific required application. In this embodiment, the encoding unit 250 is configured to encode the correction to the respective segment, the decoding unit 260 is configured to decode the encoded correction to the respective segment, and the combination unit 270 is configured to determine the combination image by performing the decoded correction to the respective segment in the hitherto accumulated client panorama image representing the scene. Finally, the sending unit 290 is configured to send the encoded correction to the client device, along with the encoded extracted field of view image and the generated field of view metadata. In addition, correction metadata may be provided to the sending unit and be send to the client device, wherein the correction metadata may for example indicate what type of correction is to be performed or what the location is of the segment to be corrected relative to the hitherto accumulated client panorama image. Different types of corrections may be carried through. For example, when a segment similarity is very low or below a predefined replace threshold, the respective segment may be replaced or refreshed. In addition or alternatively, when a segment similarity is below a predefined color threshold, the respective segment may be color corrected. A color correction may be performed and encoded in a plurality of manners, which will be further elaborated in view of figures 8 and 9.

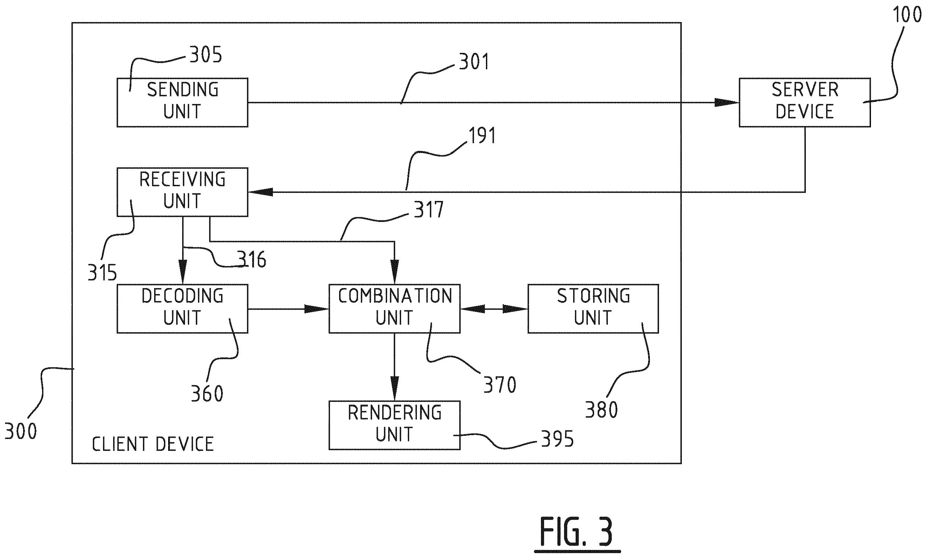

Figure 3 schematically illustrates an embodiment of a client device 300 for receiving streamed video content. More in particular, figure 3 illustrates a client device 300 for receiving streamed video content regarding a scene from a server device 100. The client device 300 comprises a sending unit 305 configured to send field of view command information to the server device 100. When the client device 300 is a HMD, the field of view command information may comprise client command data being indicative for the orientation of the HMD, the view direction or a line of sight of the user of the HMD, etc. As described above, the server device 100 will determine a field of view, generate corresponding field of view metadata, extract a field of view image, and consequently encode and send the extracted field of view image to the client device 300 along with the generated field of view metadata. At the client device 300, the receiving unit 315 is configured to receive the encoded field of view image and generated field of view metadata from the server device 100, 200. In addition, the client device 300 comprises a decoding unit 360, combination unit 370 and storing unit 380, which provided a similar functionality as compared to the decoding unit 160, 260 combination unit 170, 270 and storing unit 180, 280 of the server device 100, 200. More in particular, the decoding unit 360 is configured to decode the encoded field of view image, the combination unit 370 is configured to determine a combination image by combining the field of view image with a hitherto accumulated client panorama image representing the scene based on the generated field of view metadata, and the storing unit 380 is configured to store the determined combination image as an updated hitherto accumulated client panorama image. Similar to the closed loop functionality as described in view of the server device 100, 200, the client device 300 also provides this closed loop functionality to decode field of view images, combine the decoded field of view images with the stored hitherto accumulated client panorama image and accordingly update the hitherto accumulated client panorama image. In this manner it is guaranteed that there is not difference or drift between the server device images and the client device images. The client device 300 further comprises a rendering unit 395 configured to render the determined combination image and may also include a display unit (not shown) which is configured to display the rendered combination image to the user of the client device 300. In an embodiment, the encoded field of view image may be an adapted field of view image, e.g. differential field of view image, and the combination unit is configured to determine a combination image by combining the adapted field of view image with the hitherto accumulated client panorama image representing the scene based on the generated field of view metadata.

In an exemplary embodiment, the receiving unit 315 is configured to receive an encoded correction from the server device 100, 200, the encoded correction may or may not comprise corresponding correction metadata. The decoding unit 360 is configured to decode the encoded correction and the combination unit 370 is configured to determine the combination image by performing the decoded correction to the respective segment in the hitherto accumulated client panorama image representing the scene. Different types of corrections may be carried through as previously described. For each type of correction, corresponding correction information and/or metadata may be generated, encoded and send by the server device 100, 200 to the client device 300. For example, when a segment similarity is very low or below a predefined replace threshold, the respective segment may be replaced or refreshed. In such an embodiment, the receiving unit 315 is configured to receive an encoded corresponding segment of the video image from the server device 100, 200, the decoding unit 360 is configured to decode the encoded corresponding segment of the video image, and the combination unit 370 is configured to determine the combination image by including the decoded corresponding segment of the video image in the hitherto accumulated client panorama image representing the scene.

In addition or alternatively, when a segment similarity is below a predefined color threshold, the respective segment may be color corrected. In such an embodiment, the receiving unit 315 is configured to receive an encoded color correction 316 from the server device, the decoding unit 360 is configured to decode the encoded color correction; and the combination unit 370 is configured to determine the combination image by performing the decoded color correction to the respective segment in the hitherto accumulated client panorama image representing the scene. Information regarding the respective segment may be obtained from color correction metadata which is provided to the receiving unit 315 and combination unit 370. A color correction may be performed and encoded in a plurality of manners, which will be further elaborated in view of figures 8 and 9. In an exemplary embodiment, the receiving unit 315 is configured to receive an encoded color correction matrix from the server device 100, 200, the decoding unit 360 is configured to decode the encoded color correction matrix, and the combination unit 370 is configured to determine the combination image by multiplying the respective segment with the decoded color correction matrix in the hitherto accumulated client panorama image representing the scene. It is clear to the skilled person that, depending on which type of correction is to be performed, corresponding correction metadata is generated at the server device 100, 200 and provided to the client device 300. This correction metadata may for example comprise information on the location and/or size of the respective segment which is to be corrected.

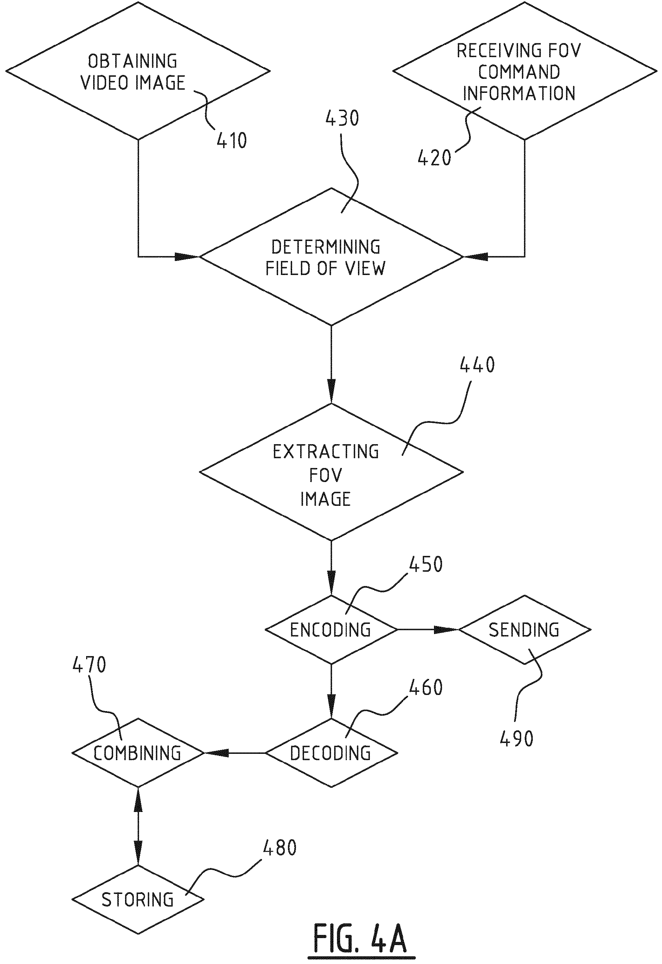

Figure 4A is a flowchart of an embodiment of a method for streaming video content. More in particular, figure 4A illustrates a method for streaming encoded video content regarding a scene to a client device. In preferred embodiments the video content comprises a sequence of video images regarding a scene comprising a substantially static panorama and, optionally, one or more moving objects within the substantially static panorama. The video content may for example comprise a 360° panoramic scene captured by a fixed video camera, wherein moving objects may occur. The method comprises a step 410 of obtaining from the video content a video image representing the scene. The video image corresponds with a frame of the video content. The server method comprises a step 420 of receiving field of view command information from the client device. When the client device is a HMD, the field of view command information may comprise client command data being indicative for the orientation of the HMD, the view direction or a line of sight of the user of the HMD, etc. The obtained video image is input to a step 430 together with the received field of view command information, wherein during step 430 a field of view is determined based on the field of view command information. The field of view corresponds with a section of the obtained video content which section is viewable by a user of the client device. The functionality of the step 430 is determining the size and/position of the field of view relative to the obtained video content. In other words, based on the received field of view command information from the client device, it is determined during step 430 which part or section of the obtained video image, e.g. 360° image, falls within the field of view of the user of the client device. During step 430 an outline of this field of view with respect to the obtained video image may be defined, by determining a size and/or position of the field of view. During step 430 field of view metadata is generated, which is representative for the size and/or position of the determined field of view within the larger context of the obtained video image. In a further developed preferred embodiment, the step 430 comprises estimating the position and/or size of the field of view based on information in addition to the received field of view command information. This additional information may comprise at least one position and/or size of one or more previously determined field of views, an estimated movement of the user of the client device, user activity, story telling aspects, etc. Consequently, during step 430 field of view metadata may be generated regarding the estimated position and/or size of the field of view. In addition to estimating the field of view, in step 430 an uncertainty regarding the estimated field of view may be estimated by means of for example Kalman filters, spline-based curve fitting and the like. The estimated uncertainty can be used to define a safety region around the estimated field of view. For example, when the uncertainty regarding an estimated field of view is large, in step 430 it may be determined that the field of view will comprise a large safety region around the estimated field of view. This means that in addition to the estimated field of view, also the large safety region is taken into account when extracting actual content for the determined or estimated field of view. Step 440 comprises extracting a field of view image from the obtained video image based on the determined or estimated field of view outline, which might or might not include a safety region as described above. Step 440 comprises matching the determined or estimated field of view with the obtained video image and determining which content is to be included in the field of view image. Since this field of view image is considered to be the content which is the most likely to be viewed by the user of the client device, this extracted field of view image will be encoded in high quality before being sent to the client device. This is done in encoding step 450 and sending step 490, respectively, which not only comprises sending the encoded field of view image to the client device but also the generated field of view metadata. The metadata allows for the client device to identify to which part of a hitherto accumulated client panorama image the field of view image corresponds. This hitherto accumulated client panorama image may be an image having the same dimensions as the obtained video image, and which is built by positioning the determined high quality field of view images within the panorama image based on the corresponding generated metadata. In other words, in stead of encoding and sending one large panorama image in 4K, which would lead to lower than HD resolution for an actual field of view, during both the method for sending and the method for receiving a panorama image is built or accumulated comprising of multiple high resolution field of view images which are accumulated or combined to form the panorama image. This client panorama image is said to be hitherto accumulated because it is constituted by previously determined field of view images. This will be further elaborated in connection to figure 7. As described above, during the method for receiving and rendering encoded video content a client panorama image is built or "painted" by consecutively updating the accumulated panorama image based on newly received field of view images. However, the method for streaming encoded video content also generates this client panorama image, independently from the receiving method, in order to be aware of the generated panorama image during the receiving method. More in particular, in addition to being sent to the client device, the encoded field of view image is decoded during the decoding step 460, and consequently the decoded field of view image is combined with the hitherto accumulated client panorama image in combining step 470. The hitherto accumulated client panorama image is stored during the storing step 480 and corresponds with the client panorama image or client panorama frame as built by the receiving and rendering method. The feature that both the sending method and the receiving method, independently from each other, generate and update the hitherto accumulated client panorama image allows for the sending method to send high quality encoded field of view images and for the receiving method to further built, paint, combine, accumulate or update the entire hitherto accumulated client panorama image based on the high quality encoded field of view images and their corresponding metadata.

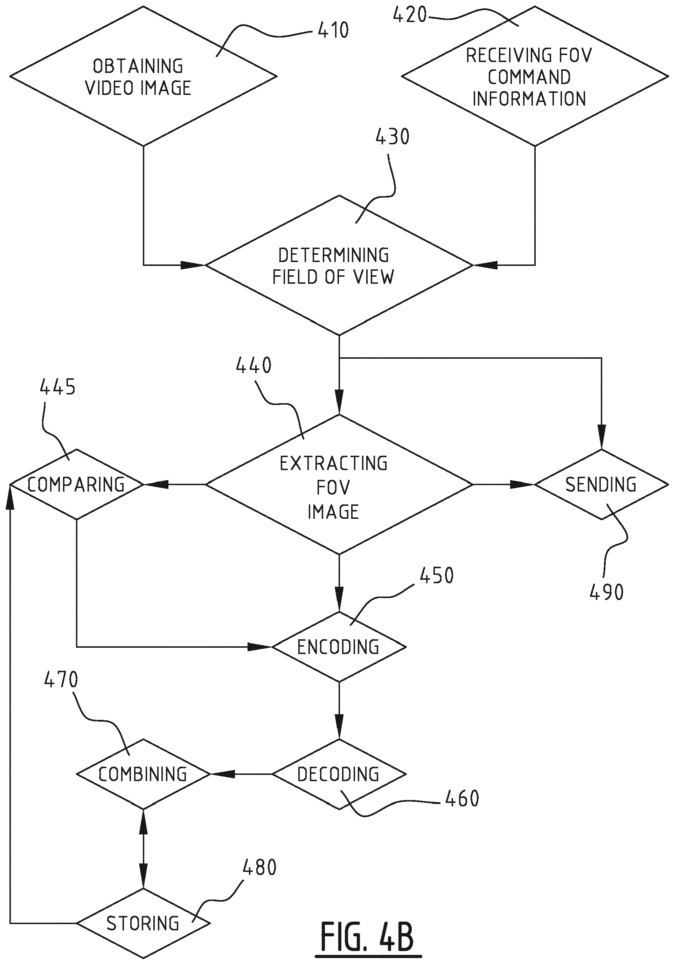

Figure 4B is a flowchart of a further embodiment of a method for streaming video content, wherein, in addition to the embodiment according to figure 4A, the method comprises a step 445 of comparing the extracted field of view image from the extracting step 440 with a corresponding section of the hitherto accumulated client panorama image representing the scene which has been previously stored during storing step 480 and which is determined based on previously extracted field of view images as described above. During step 445 an adapted field of view image is further determined based on a difference between the extracted field of view image and the corresponding section of the hitherto accumulated client panorama image. The adapted field of view image may for example be a differential field of view image, which is representative for the difference between the extracted field of view image and the corresponding section of the hitherto accumulated client panorama image. In this manner, only the differential image need to be encoded and send to the client device, which results in a more efficient use of bandwidth, especially when the difference between both images is small. When the extracted field of view image corresponds with a field of view which had not yet been viewed by the user of the client device, the differential field of view image would be equal to the extracted field of view image because the section of the hitherto accumulated client panorama image which corresponds to the newly extracted field of view image would be empty. In this embodiment, the encoding step 450 comprises encoding the adapted field of view image, the decoding step 460 comprises decoding the encoded adapted field of view image and the combining step 445 comprises determining a combination image by combining the decoded adapted field of view image with the hitherto accumulated client panorama image representing the scene. Furthermore, the storing step 480 comprises storing the determined combination image as an updated hitherto accumulated client panorama image, the sending step 490 comprises sending the encoded adapted field of view image and the generated field of view metadata to the client device.

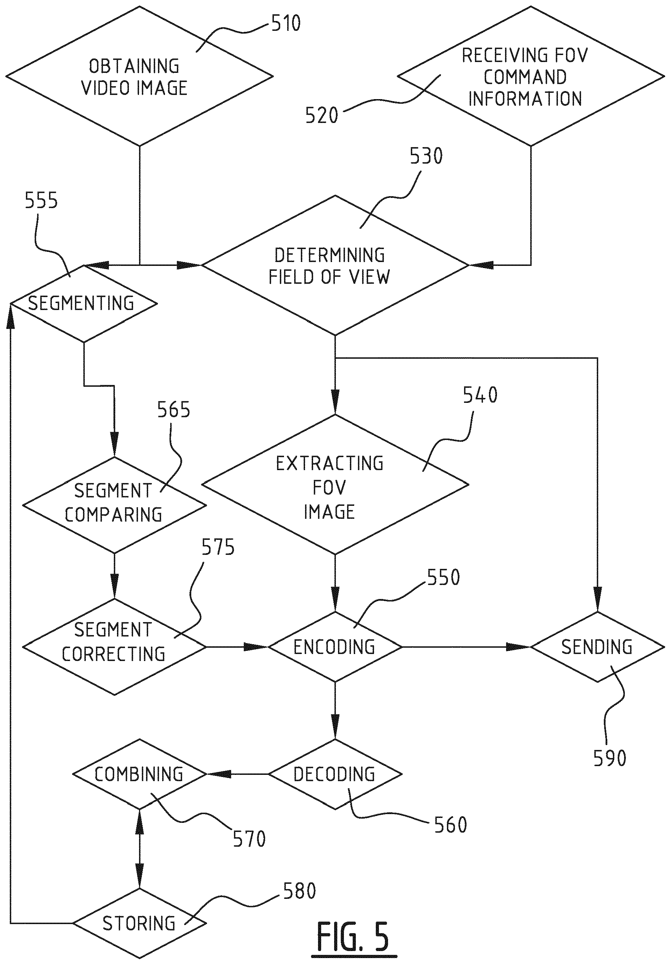

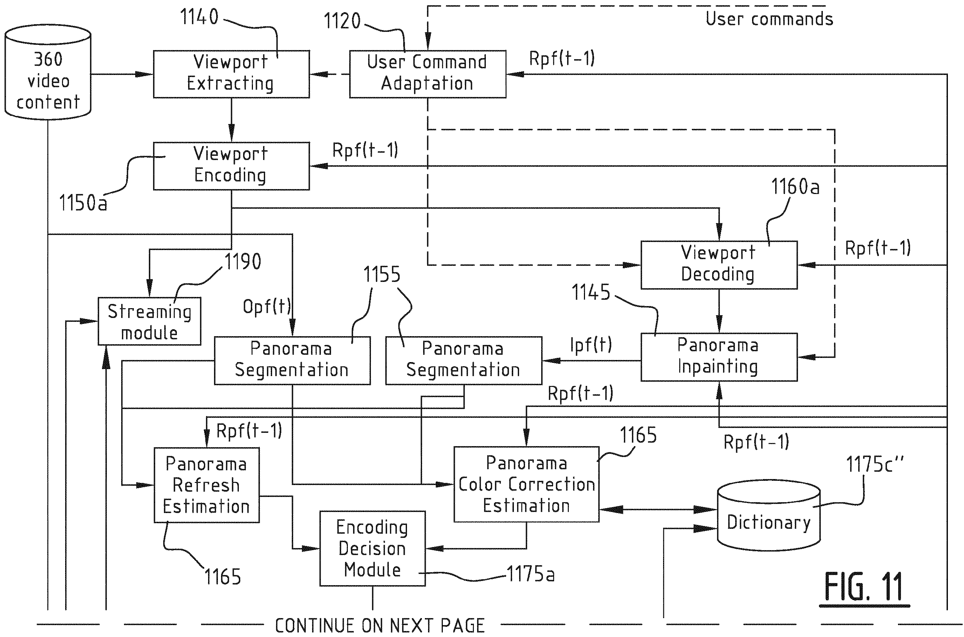

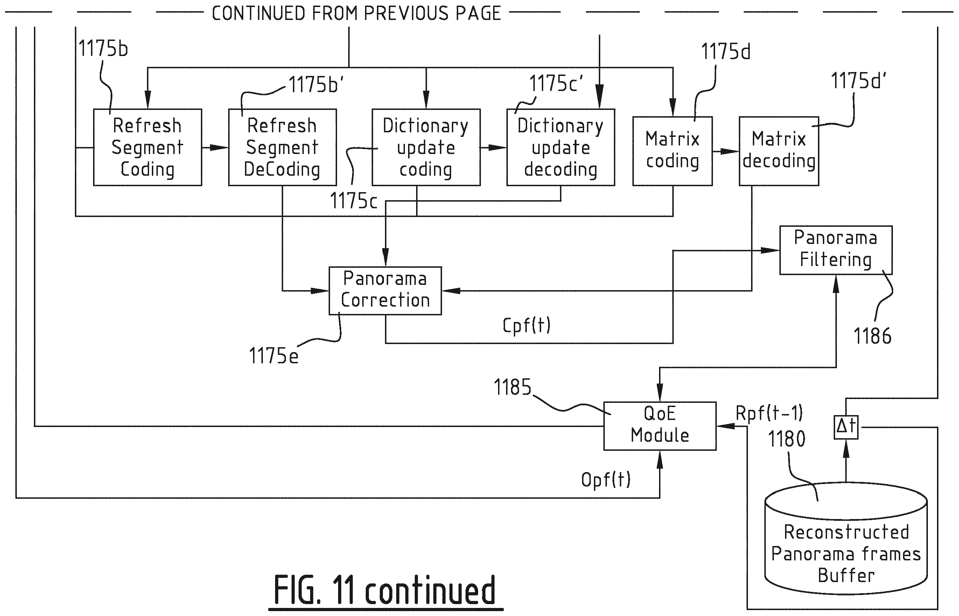

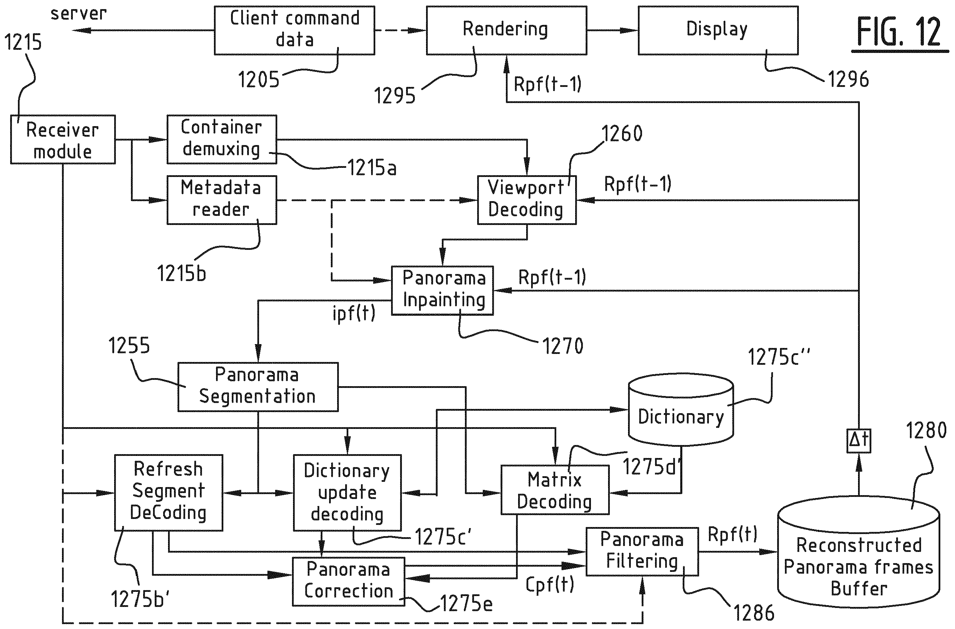

Figure 5 is a flowchart of an embodiment of a method for streaming video content, wherein the method, in addition to the method of figure 4A, further comprises a segmenting step 555, a segment comparing step 565 and a segment correcting step 575. Although it is not illustrated in figure 5, the method may further comprise a comparing step 445 as illustrated in figure 4B. In figure 5, the segmenting step 555 comprises dividing the obtained video image and the hitherto accumulated client panorama image in corresponding segments, such that for each segment in the video image a corresponding segment is present in the accumulated panorama image. During segmenting step 555 for example a motion estimation technique may be employed to find corresponding pairs of segments in both images. When corresponding segments have been identified, during segment comparing step 565 corresponding segments will be compared and a segment similarity will be determined based on the differences between corresponding segments, if any. In other words, if hardly any difference is found, corresponding segments are considered to have a high segment similarity. If a lot of differences and/or big differences are found, corresponding segments are considered to have a low segment similarity. It is clear to the skilled person that the definition of a low and/or a high segment similarity may vary from one specific application to another. Consequently, the segment correcting step 575 comprises performing a correction to the respective segment in the accumulated client panorama image if the corresponding segment similarity is below a pre-defined similarity threshold. This similarity threshold may be arbitrarily chosen in dependence of the specific required application. In this embodiment, the encoding step 550 comprises encoding the correction to the respective segment, the decoding step 560 comprises decoding the encoded correction to the respective segment, and the combining step 570 comprises determining the combination image by performing the decoded correction to the respective segment in the hitherto accumulated client panorama image representing the scene. Finally, the sending step 590 comprises sending the encoded correction to the client device, along with the encoded extracted field of view image and the generated field of view metadata. In addition, correction metadata may be provided and may be send to the client device during the sending step, wherein the correction metadata may for example indicate what type of correction is to be performed or what the location is of the segment to be corrected relative to the hitherto accumulated client panorama image. Different types of corrections may be carried through. For example, when a segment similarity is very low or below a predefined replace threshold, the respective segment may be replaced or refreshed. In addition or alternatively, when a segment similarity is below a predefined color threshold, the respective segment may be color corrected. A color correction may be performed and encoded in a plurality of manners, which will be further elaborated in view of figures 11 and 12.

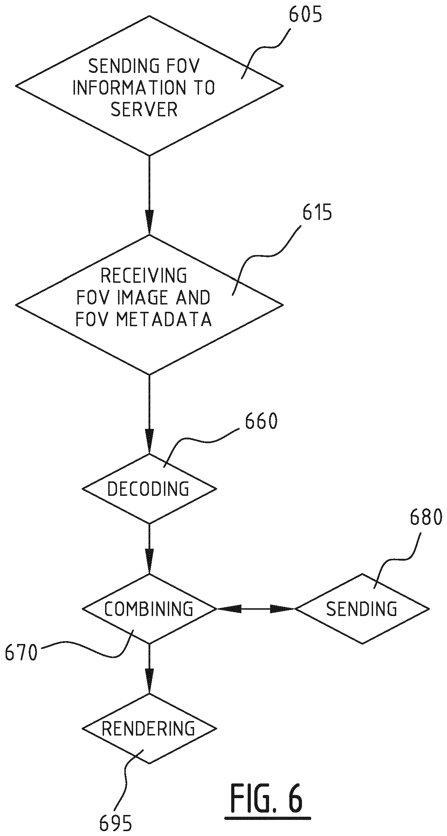

Figure 6 is a flowchart of an embodiment of a method for receiving encoded video content. More in particular, figure 6 illustrates a mehtod for receiving streamed video content regarding a scene from a server device and rendering the received video content. The method comprises a sending step 605 of sending field of view command information to the server device. When the client device is a HMD, the field of view command information may comprise client command data being indicative for the orientation of the HMD, the view direction or a line of sight of the user of the HMD, etc. As described above, at a server side a field of view will be determined, corresponding field of view metadata will be generated, a field of view image will be extracted, and consequently the extracted field of view image will be encoded and sent to the client device along with the generated field of view metadata. At the client side, the receiving step 615 comprises receiving the encoded field of view image and generated field of view metadata from the server side. In addition, the method comprises a decoding step 660, combining step 670 and storing step 680, which provide a similar functionality as compared to the decoding step 460, 560 combining step 470, 570 and storing step 480, 580 on the server side as illustrated in figure 4A, 4B and 5. More in particular, the decoding step 660 comprises decoding the encoded field of view image, the combining step 670 comprises determining a combination image by combining the field of view image with a hitherto accumulated client panorama image representing the scene based on the generated field of view metadata, and the storing step 680 comprises storing the determined combination image as an updated hitherto accumulated client panorama image. Similar to the closed loop functionality as described in view of the methods at the server side, the method at the client side also provides this closed loop functionality by decoding field of view images, combining the decoded field of view images with the stored hitherto accumulated client panorama image and accordingly updating the hitherto accumulated client panorama image. In this manner it is guaranteed that there is no difference or drift between the server side images and the client side images. The method further comprises a rendering 695 configured to render the determined combination image and may also comprise a display step (not shown) which comprises displaying the rendered combination image to the user of the client device, e.g. on the screen of a HMD. In an embodiment, the encoded field of view image may be an adapted field of view image, e.g. differential field of view image, and the combination unit is configured to determine a combination image by combining the adapted field of view image with the hitherto accumulated client panorama image representing the scene based on the generated field of view metadata.

In an exemplary embodiment, the receiving step 615 comprises receiving an encoded correction from the server side, the encoded correction may or may not comprise corresponding correction metadata. The decoding step 660 comprises to decoding the encoded correction and the combining step 670 comprises determining the combination image by performing the decoded correction to the respective segment in the hitherto accumulated client panorama image representing the scene. Different types of corrections may be carried through as previously described. For each type of correction, corresponding correction information and/or metadata may be generated, encoded and send. For example, when a segment similarity is very low or below a predefined replace threshold, the respective segment may be replaced or refreshed. In such an embodiment, the receiving step 615 comprises receiving an encoded corresponding segment of the video image from the server side, the decoding step 660 comprises decoding the encoded corresponding segment of the video image, and the combining step 670 comprises determining the combination image by including the decoded corresponding segment of the video image in the hitherto accumulated client panorama image representing the scene.

In addition or alternatively, when a segment similarity is below a predefined color threshold, the respective segment may be color corrected. In such an embodiment, the receiving step 615 comprises receiving an encoded color correction from the server side, the decoding step 660 comprises decoding the encoded color correction; and the combining step 670 comprises determining the combination image by performing the decoded color correction to the respective segment in the hitherto accumulated client panorama image representing the scene. Information regarding the respective segment may be obtained from color correction metadata which is provided during the receiving step 615 and forwarded in advance of the combining step 670. A color correction may be performed and encoded in a plurality of manners, which will be further elaborated in view of figures 11 and 12. In an exemplary embodiment, the receiving step 615 comprises receiving an encoded color correction matrix from the server side, the decoding step 660 comprises decoding the encoded color correction matrix, and the combining step 670 comprises determining the combination image by multiplying the respective segment with the decoded color correction matrix in the hitherto accumulated client panorama image representing the scene. It is clear to the skilled person that, depending on which type of correction is to be performed, corresponding correction metadata is generated at the server side and provided to the client side. This correction metadata may for example comprise information on the location and/or size of the respective segment which is to be corrected.

Figure 7 schematically illustrates how a hitherto accumulated client panorama image may be determined by a server device 100, 200 and a client device 300. The described server device 100, 200 and client device 300 are part of the currently proposed encoding approach which uses a different ROI streaming technique, wherein the client device 300 stores a "memorized" reconstructed frame, which is referred to as hitherto accumulated client panorama image, of the whole 360° scene and uses this reconstructed frame or client panorama image for motion compensation at both the client device side 300 and server device side 100, 200. The prior art approach of falling back on the 360° low resolution areas is something to be avoided, especially when assuming that the 360° sphere or scene is substantially static when captured with a 360° camera whose position is fixed. Therefore only the ROI, which is referred to as field of view image, is send to the client device 300 with a slightly larger area than required. However, no 360° low resolution video is sent as fall-back. Instead, 360° sphere or client panoramic image at the HMD side 300 is painted, accumulated, built or filled with pixels that have been last seen in a field of view image or viewport in full resolution. This is illustrated in figure 7. Optionally, the sphere or client panoramic image can also be initialized with one picture or video image in either low resolution or full resolution of the sphere in order to speed up the painting process at the start of the transmission.

In addition, this approach is used to improve encoding by allowing the inpainted or accumulated 360° sphere to be used for motion compensation at the encoding side. This means that the server device 100, 200 knows the state of the 360° sphere reconstructed or accumulated at the client device side 300 and can exploit this to reduce the bandwidth needed to stream the viewport or field of view image itself. In other words, knowing the position of the viewport or field of view sent at each frame, the global 360° reference frame is painted and/or refreshed with the newly received field of view images and the portions of the sphere which have already been seen but are no longer in view of the user are stored at both the server device 100, 200 and client device 300. This is efficient because especially when the background is static, long term references in full resolution are considerably better predictions as compared with a lower resolution version or pixels from an independently encoded ROI whose position is moving.

In prior art approaches, when the user has already seen a viewport position in the 360° sphere before, has moved or looked away and comes back fast, he or she will see for a short amount of time the pixelated 360° video, which results in an unacceptable quality of experience. In the proposed approach, the user will see for a short amount of time the last seen static version of that area of the sphere in full resolution, which has a much higher visual quality.

With further reference to figure 7, the painting process or accumulation process as carried out at the server device 100, 200 and client device 300 is visually illustrated. In the left hand column, a video image and a corresponding field of view are shown for three moments in time t1, t2, t3. The user moves the viewport or field of view in three different time instances t1, t2 and t3 in this example. The video content or video images are assumed to at least be slightly different at the different moments in time, due to user movement and/or moving objects within the scene. Therefore the content of each video image 701a, 702a, 703a is illustrated as being mutually different. In a similar, way the content of the video images may remain substantially static, but for illustrating purposes, the video images 701a, 702a, 703a are shown as having different content. The corresponding field of view positions are illustrated by the outlines 711a, 712a, and 713a. In the middle column it is illustrated how the hitherto accumulated client panorama image 701b, 702b, 703b is determined based on the field of view images 711b, 712b, 713b as extracted at the three time points t1, t2 and t3 from the corresponding video images 701a, 702a, 703a. At t1, one field of view image 711b is used to build, accumulate or paint the hitherto accumulated client panorama image 701b, at t2 two field of view images 711b, 712b are used to build or paint the hitherto accumulated client panorama image 702b, and at t3 three field of view images 711b, 712b, 713b are used to build or paint the hitherto accumulated client panorama image 703b. The last seen pixels corresponding to the field of view image are updated in the hitherto accumulated client panorama image, also referred to as reconstructed frame, where they need to be placed while the earlier seen pixels remain static but are usable for predictions. The positions of the field of view at the time points t1, t2 and t3 with respect to the video image and/or client panorama frame are illustrated at the right hand side of figure 7. It is clear to the skilled person that different subsequently determined field of views 711a, 712a, 713a may or may not be overlapping. Moreover, it is understood by the skilled person that the illustrated embodiment corresponds with an initialization phase wherein the hitherto accumulated client panorama image is assumed to be "empty" at timepoint t0 (not shown) and is gradually filled with subsequently determined field of view images 711b, 712b, 713b and that in this manner, the entire hitherto accumulated client panorama image may be gradually "filled".

Figure 8 schematically illustrates a further developed embodiment of a server device for streaming video content, while figure 9 schematically illustrates a further developed embodiment of a client device for receiving streamed video content. The server device of figure 8 and the client device of figure 6 may cooperate to form a video streaming assembly according to an aspect. Although the server device and client device have been previously described in function of functional units or processors, it is clear to the skilled person that the functionality of any one of the previously described units, may be divided into a plurality of functional blocks, or, vice versa, that the functionality of multiple units is combined within one functional block, as will become apparent in the below description.

In the embodiment of figure 8, at the server device, the 360° content is decoded or ingested into raw format at content decoding element 810. Based on user command data or field of view command data 301 received from the client device 300 received at block 820, the server device decides which viewport position and size is required in the viewport position decision module 830a. The wording "viewport" corresponds with the earlier introduced wording of "field of view" (FOV) and both words may be used interchangeably in this description. This position can be defined based on previous viewport positions and may be optimized in case it can be detected or determined whether the user is currently moving into a given direction, or stays static for a while. The decided position can then anticipate next moves following a Kalman filter. The uncertainty with which this position is known and decided based on previous observations also impacts the size of the field of view image that will be extracted at block 840 and encoded at block 850. Optionally, this decision can also be influenced by the nature of the content itself provided by the illustrated optional Panorama and Quality of Experience (QoE) module 885.

This information on the position and size of the viewport is sent to the panorama frame inpainting module 845. This module creates the frames that will be encoded in the encoding module.

To make sure of no drift between server and client, the server works in closed loop, meaning that the encoded frames from block 850 are decoded at block 860 and then sent to the client reconstructed frame generator 870. This module 870 also inputs the status from the client 301 to for example reduce the amount of pixels to be decoded in order to save battery. This module 870 therefore makes sure the client reconstructed frames are the same at server and client side.

The reconstructed frames are stored in a buffer or storing unit 880 that is used as input for the painting module or combination unit as described before as well as for the reconstructed panorama analysis and QoE module 885. That module will, optionally, identify the current differences between the input content and the client reconstructed frames to enable QoE analysis and refine encoding rate control, or change the viewport size, or again influence the next viewport positions.

Finally, encoded viewport positions are encoded as metadata at block 830b and synchronized with the encoded frames to be muxed 890a in a video container 191 ready to be streamed to the client.

As illustrated in figure 9 the client side implements some of the modules 960, 970, 980 already present in the server device so as to enable the client reconstructed frames, also referred to as hitherto accumulated client panorama images, to be the same at both sides. Besides the user viewport coordinates to be sent to the server device, the modules enable to decode 960 the input video container received from the server side 200. The client device demuxes 915a the container reads the corresponding metadata 915b and uses the viewport coordinates and corresponding metadata to inpaint the frames at block 970 in a similar manner as it is done in the server device. The decoder 960 can then produce client reconstructed frames that are stored in a buffer 980 and sent to a rendering module 995 specific to the HMD used and then the display 996.

Encoding can be performed in a plurality of manners. For example, the server device can send only the viewport ROI together with the metadata. This optimizes bandwidth and the client device can inpaint the panorama based on that. Alternatively, the server can leverage the fact that inpainted reconstructed frames are the same at server side and client side to provide differential encoding, hence not encoding the viewport but the difference between the viewport and the inpainted panorama region. Alternatively, the server device can encode full panorama frames where viewport pixels are colored but all other are set to black, thereby also enabling high compression. This would however require the client device to decode large frames that contain a little amount of non-black pixels, hence requiring an optimized decoding based on the available metadata sent by the server. Alternatively, the server device can encode a floating fixed size frame containing the viewport that is centered. This frame can be called a canvas and is decoded by the client with the knowledge of the viewport metadata present in the container sent by the server device.

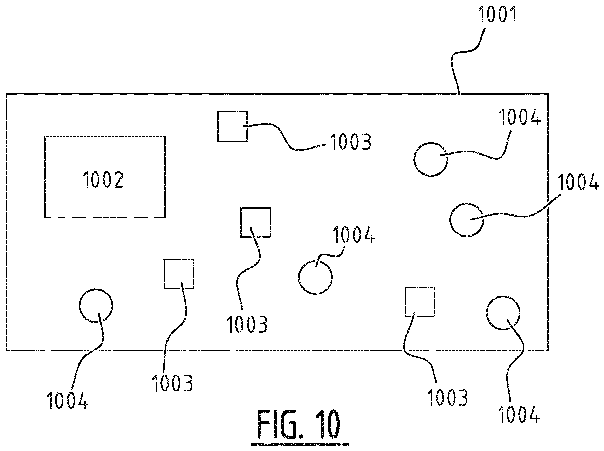

Figure 10 schematically illustrates how different segments 1003, 1004 of a panorama image 1001 may be corrected.

The previously described persistence-based viewport adaptive streaming has many advantages for static scenes. In the extreme case of a fully static panorama, it is sufficient for the client device to browse the entire panorama in order to reconstruct it fully with no need of additional data, while a prior art viewport adaptive streaming approach would always encode new viewport information. The persistence-based streaming approach is still advantageous when there is only a small region of interest in the content that moves while the rest of the panorama is static. In such a case, the persistence-based viewport adaptive streaming approach enables to reduce the amount of information to be sent to the client as it enables to re-use what was previously seen in very high quality on the full panorama. In case of less static content, say captured by a 360° camera in outdoors conditions, there might be slight changes in the panorama due to lighting effects, e.g. moving clouds, which occur locally or globally. In that case, persistence-based viewport adaptive streaming might be less efficient since inpainted panorama images contain prior information that is very correlated to the current content but display a slight contrast or illumination difference that can drastically reduce the compression efficiency.

In order to deal with this issue it is currently proposed to use some light metadata that will enable the client to refresh and correct the inpainted panoramas in its buffer by applying local patch refresh 1003 and color correction 1004 techniques. The tradeoff between the amount of information to be sent to correct the inpainted panorama 1001 and the overall compression efficiency that results from it is advantageous.

Performing corrections such as replace/refresh 1003 and color corrections 1004 are especially beneficial in outdoor conditions or in artificial light conditions where global illumination changes appear with a given periodicity, e.g. frequency of artificial lights, or over time, e.g. appearance of clouds hiding the sun light in some portions of the content. Figure 10 illustrates schematically a client panorama image 1001 wherein the field of view (FOV) 1002 is illustrated along with segments which will be replaced 1003, segments that will be color corrected by means of a color correction matrix 1004, and segments that will be color corrected by means of color correction interpolation. The latter segments are not illustrated explicitly in figure 10 but may correspond with the remaining area of the client panorama image 1001 apart from the FOV 1002, and segments 1003 and 1004. These different types of corrections will be further elaborated below in connection with figures 11 and 12. When performing segmentation correction techniques, in a preferred embodiment the FOV is not taken into account, since the FOV is refreshed according to the previously described embodiments and therefore does not need to be corrected.

Figure 11 schematically illustrates a further developed embodiment of a server device for streaming video content, while figure 12 schematically illustrates a further developed embodiment of a client device for receiving streamed video content. The server device of figure 11 and the client device of figure 12 may cooperate to form a video streaming system. Although the server device and client device have been previously described in function of functional units or processors, it is clear to the skilled person that the functionality of any one of the previously described units, may be divided into a plurality of functional blocks, or, vice versa, that the functionality of multiple units is combined within one functional block, as will become apparent in the below description.

The embodiments as shown in figures 11 and 12 allow to perform two types of corrections, more in particular color correction and local refresh/replace. Color correction is useful to compensate for global and/or local illumination changes. Typically some materials reflect the lighting differently if lighting conditions vary and this can be captured at minimal cost by color correction. The same occurs when clouds occlude the sun light for some areas of the 360° content. Local refresh enables to detect areas of the background that significantly vary because of motion or objects appearing while they were occluded before. These portions are intra-encoded and sent to the receiver to enhance these portions of the inpainted background. In a further embodiment, a rate-distortion module 1175a enables to optimally balance the number of regions that are color corrected and refreshed for a target visual quality. This can be optimized based on the proximity of the viewport but also by the predicted trajectory of the viewport so that the encoder optimizes the background where it is the most needed.

As previously described, it is featured that that the field of view image extracted at block 1140 is encoded 1150a and inpainted 1145 on the panorama image in a closed loop at the server device, such that the decoder unit of the client device can perform the exact same operations. This allows the field of view image to be encoded with the knowledge of the reconstructed panorama frames, referred to as rpf below, at the client side to gain coding efficiency.

To describe the exemplary embodiment of figures 11 and 12, following definitions and notations are assument:

**Opf(t):** *Original panorama frame at time t:* that is the input content to be streamed.
**Rpf(t-1):** *Reconstructed panorama frame at time t-1 (up to t-2... t-N):* these are the reconstructed panorama frames that have been inpainted AND corrected via refresh and color correction AND filtered.
**Ipf(t):** *Inpainted panorama frame at time t:* these are the frames that have been inpainted by decoding the viewport and using the previous reconstructed frames: i.e. frames that will undergo color correction and refresh.
**Cpf(t):** *Corrected panorama frame at time t:* these are the reconstructed panorama frames that have been inpainted AND corrected via refresh and color correction but not yet filtered.

Color correction and local refresh are done by first segmenting the original panorama frames **opf(t)** and the inpainted panorama frames **ipf(t)** in blocks 1155 in portions or segments that exhibit sufficient similarity. This segmentation can be implemented by superpixels, quadtree blocks, or any other segmentation approach that leads to regions of at least 16x16 pixels but that do not need to have a symmetric shape.

Preferably, the viewport is not segmented as it is encoded and sent to the client device. This segmentation is done both on the original frames **opf(t)** as well as on the corresponding client inpainted frames **ipf(t)** so that the latter can be handled by the decoder in a closed loop manner. For each segment in the original content **opf(t),** the server identifies the corresponding segment in the inpainted panorama frames **ipf(t).**

The server identifies which segments can be improved by color correction and those who need to be refreshed because of their activity, i.e. significant difference between segments due to motion or occlusions, in the encoding decision module 1175a based on the information coming from blocks 1165. The refresh/replace correction type 1175b, 1175b' simply requires to intra code the respective segments and stream 1190 them to the client.

Optionally, the encoder can encode the difference between the refresh segments and their corresponding pixels in the inpainted panorama frame **ipf(t)** but due the nature of the refresh segments this may not lead to improved compression performances.

Preferably the color correction process first computes a color correction matrix that enables to retrieve the best approximation in a L2, i.e. least square error, sense of the original segment by applying this matrix to the corresponding reconstructed panorama segment pixels.

The color correction of a pixel can therefore be modeled as a linear transform on the three color channels. For illustrative purposed, here the example of a YCbCr color space in <y,u,v> triplets is chosen, but any other color space is possible such as RGB. We define a color correction matrix C as follows:

$$C = \begin{pmatrix} y_1 & u_1 & v_1 \\ y_2 & u_2 & v_2 \\ y_3 & u_3 & v_3 \end{pmatrix} \tag{Eq. 1}$$

This leads to:

$$p_{corr} = C.p + \varepsilon \tag{Eq. 2}$$

Wherein $p_{corr}$ stands for the corrected output pixel, a 3x1 vector of yuv components, $p$ stands for the input pixel, a 3x1 vector of yuv components, and $\varepsilon$ is typically modeling noise, a 3x1 vector for each color channel component. It may be considered that a pixel or region of pixels can be color corrected if the L2 norm of $\varepsilon$ is small, i.e. smaller than a predefined threshold.

In order to derive the color correction matrix that enables to transform $p$ into $p_{corr}$ for each pixel of a pre-defined region *Rin* of input pixels and a region *Rout* of output corrected pixels, an optimization problem may be solved as follows: We minimize the least squared error sum $E = \sum_{i \in R} \|(Cp_{corr_i} - p_i)\|^2$ for all corresponding pixels in Rin and Rout.

This can be easily solved by $C = (\sum(p_{corr\_ipi}{}^T)).pseudo\_inverse(\sum(p_i p_i{}^T))$

Other matrix derivation processes are possible of course to find the best matrix C for transforming a set of pixels $p_i$ into a set of pixels $p_{corr\_i}$.

This matrix C is used to encode the signal difference between these pairs of pixels at blocks 1175d, 1175d'.

That is, the sending unit 1190 needs to send the color matrix $C_{Ri}$ for a patch or segment *Ri* in the original frame mapping to the corresponding patch or segment *Ri* in the inpainted panorama frame **ipf(t).** These corresponding patches, segments or regions preferably contain the same amount of pixels but do not need to be collocated in the same area of the panorama frames. A distance vector *Vi* can be sent as well to derive the position of *Ri* in the inpainted reconstructed panorama frame **ipf(t)** and the position of *Ri* in the original panorama frame **opf(t).**

It is clear to the skilled person that encoding the matrix C can be done in different ways, each matrix element being represented in floating point precision for a correct estimation of Eq. 2. Following possibilities may be considered: lossy entropy encoding of the matrix components in Eq. 1, lossy entropy encoding of the eigenvalues of the matrix and its eigenvectors, lossy entropy encoding of the determinant of the matrix and the matrix components divided by this determinant, etc. Lossy entropy encoding is done by quantizing the aforementioned components by a predetermined quantization parameter Qp.

In practice however, many patches or segments have similar color correction matrices, typically when these segments or patches have similar colors in the original obtained video content. A color matrix dictionary D 1175c" may be used at both server device and client device as it will be described below.

For some segments the L2 approximation is not good enough, i.e. the norm of the vector $\varepsilon$ is not small enough in Eq. 2. Two options are then possible, either encode the difference of the segment pixels or use interpolated color correction. The latter requires significantly less bits to be processed as will be described below.

For those segments where an efficient color matrix is found, this matrix is encoded and sent to the client device together with the position of the segment encoded as metadata. Color matrices tend to be similar or the same for regions that are uniform, hence it is efficient to create a growing dictionary 1175c" of color matrices via blocks 1175c and 1175c' at both the server device and client device and to use indexes. Every time a significantly different matrix is used, this matrix may be added in the dictionary 1175".

In an embodiment, it is assumed that two matrices $M_1$ and $M_2$ are significantly different when the sum of absolute differences of the corresponding components of $M_1$ and $M_2$ exceeds a predetermined threshold, alternatively, these matrices are considered to be significantly different if the two largest eigenvalues of $M_1$ and $M_2$ are respectively different

by an absolute difference value that is larger than a predefined threshold. Note that here the cases of matrices that are similar in the sense that their components would be equal after a change of basis are not considered. Indeed, as all color matrices for a given content correspond to the same color space, there is no relevant basis change to be considered.

For segments that are not refreshed and not directly color corrected from the dictionary matrices, it is possible to correct them with color correction interpolation. This is done by identifying the set $K$ of k-nearest neighboring segments that were directly color corrected and use as a color correction matrix a weighted sum of their corresponding color matrix dictionary entries as in Eq. 3. The weights are computed based on the pixel distance between the current segment pixels and the corresponding directly color corrected segments as in Eq. 4.

$$C_{interpolated} = \sum_{i \in K} w_i C_i \qquad \text{(Eq. 3)}$$

Wherein

$$w_i = \frac{\sum_{j \in K} dist(segment, segment_j)}{dist(segment, segment_i)} \qquad \text{(Eq. 4)}$$

Once the inpainted panorama frame **ipf(t)** has been corrected by color correction and refresh, the resulting panorama frame is called corrected panorama frame **cpf(t).**

As a final optional step, a panorama filtering 1186 is possible to smooth differences appearing between segments which are refreshed, the viewport and the color corrected areas of the corrected panorama frames **cpf(t)** to generate the final reconstructed frame **rpf(t)** that will be stored in the reconstructed panorama frame buffer. Here again this filter is symmetric at the server and the client side. This filter can be implemented by a deblocking filter similar to the one designed in H.264 and H.265. Filter parameters can also be streamed by the server to the client to adapt filtering based on QoE estimations in the optional QoE module 1185 that compares previous reconstructed inpainted panorama frames with the original panorama frames.

The stream being sent to the client is then composed of the following:

- An encoded field of view image based on the previous reconstructed panorama frames **rpf(t-1),** wherein the field of view image is initially extracted at block 1140.
- Segment identifiers which map to the inpainted panorama frame **ipf(t))** and their encoded matrix or matrix index in the dictionary 1175c" for directly color corrected segments
- Segment id and a color correction interpolation flag, no information needs to be transmitted to be able to reproduce the computation at server side and client side;
- Segment id and intra coded blocks for refresh segments.
- Optionally panorama filtering parameters for filtering the corrected panorama frames **cpf(t)** in order to generate the final reconstructed panorama frames **rpf(t).**

The embodiment as illustrated in figures 11 and 12 is based on the concept of persistence-based or memory-based encoding as described in combination with figures 1A, 1B, 2, 3, 8 and 9. In addition thereto, panorama image correction techniques such as refresh and color correction are used. These color correction techniques require a content segmentation and are first estimated in the corresponding modules, i.e. refresh estimation 1165, color correction estimation 1165, or corresponding units, i.e. segment comparing unit, segment correcting unit. Further, an encoding decision module 1175a integrates all the estimations from the previous modules and decides which segments will be (i) refreshed (1175b, 1175b'), (ii) color corrected with an encoded matrix (1175d, 1175d'), and (iii) color corrected by color matrix interpolation from dictionary entries (1175c, 1175c'). These correction techniques require to encode and stream refreshed segments, color matrices and color correction matrices dictionary entries, respectively. In order to allow for closed loop corrections at server device and client device these encoded data are decoded and then only used in the panorama correction module 1175e that applies all correction techniques as described before. Optionally, a filter 1186 can be applied to generate the final reconstructed frames.

At the client device as illustrated in figure 12, the decoder 1260, 1275b', 1275c', 1275d' performs similar tasks as at the server device. The viewport is decoded based on the possibly N previous reconstructed frames **rpf(t-1)** in the reconstructed panorama frames buffer 1280 and viewport metadata. An updated panorama image is built 1270 with the decoded viewport 1260, this generates the inpainted panorama frame **ipf(t),** and, for all directly color corrected segment, decodes, if present, the transmitted color matrix and adds it to the color matrices dictionary D 1275c", then use it or the color matrix corresponding to the color correction matrix entry id received to color correct the segment in the inpainted panorama frame using Eq. 2. Then for segments that are color corrected by interpolation, the decoder reads the flag and uses equations Eq. 3 and Eq. 4. Finally, for segments to be refreshed, the client decodes the intra coded blocks and updates them on the inpainted panorama frame **ipf(t)**. By performing these corrections, the **cpf(t)** are generated.

Optionally, the decoder applies a filter that is flagged by the server, as well as its parameters, on the corrected panorama frame **cpf(t)** generating the **rpf(t)** to be stored in the reconstructed panorama frames buffer 1280. If filtering is not performed, then **rpf(t)** is simply a copy of the **cpf(t).** The client device then renders 1295 and displays 1296 the reconstructed panorama frames based on the current viewport position according to the user commands 1205, which may or may not differ from the viewport position streamed by the server depending on the applied embodiment.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the proposed approach. It will thus be appreciated that those skilled in the art will be able to devise various arrangements that, although not explicitly described or shown herein, embody the principles of the proposed approach and are included within its scope. Furthermore, all examples recited herein are principally intended expressly to be only for pedagogical purposes to aid the reader in understanding the principles of the proposed approach and the concepts contributed by the inventor(s) to furthering the art, and are to be construed as being without limitation to such specifically recited examples and conditions. Moreover, all statements herein reciting principles, aspects, and embodiments of the proposed approach, as well as specific examples thereof, are intended to encompass equivalents thereof.

The functions of the various elements shown in the figures, including any functional blocks labelled as "processors" or "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the proposed approach. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the proposed approach and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The proposed approach can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present disclosure, expressions such as "comprise", "include", "have", "may comprise", "may include", or "may have" indicate existence of corresponding features but do not exclude existence of additional features.

Whilst the principles of the proposed approach have been set out above in connection with specific embodiments, it is to be understood that this description is merely made by way of example and not as a limitation of the scope of protection which is determined by the appended claims.

**Claims**

**1.** Server device for streaming encoded video content to a client device, the server device comprising:

EP 3 515 082 B1

- a video image obtaining unit configured to obtain from the video content a video image;
- an information receiving unit configured to receive field of view command information from the client device;
- a determining unit configured to determine a field of view based on the field of view command information, and to generate field of view metadata regarding the determined field of view;
- an extracting unit configured to extract a field of view image from the obtained video image based on the determined field of view;
- an encoding unit configured to encode the extracted field of view image;
- a decoding unit configured to decode the encoded field of view image;
- a combination unit configured to determine a combination image by combining the decoded field of view image with a hitherto accumulated client panorama image;
- a storing unit configured to store the determined combination image as an updated hitherto accumulated client panorama image; and
- a sending unit configured to send the encoded field of view image and the generated field of view metadata to the client device.

2. Server device according to claim 1, further comprising a comparison unit configured to compare the extracted field of view image with a corresponding section of the hitherto accumulated client panorama image, and to determine an adapted field of view image based on a difference between the extracted field of view image and the corresponding section of the hitherto accumulated client panorama image, and wherein:

- the encoding unit is configured to encode the adapted field of view image;
- the decoding unit is configured to decode the encoded adapted field of view image;
- the combination unit is configured to determine a combination image by combining the decoded adapted field of view image with the hitherto accumulated client panorama image;
- the storing unit is configured to store the determined combination image as an updated hitherto accumulated client panorama image; and
- the sending unit is configured to send the encoded adapted field of view image and the generated field of view metadata to the client device.

3. Server device according to claim 1 or 2, wherein the field of view corresponds with a section of the obtained video content which section is viewable by a user of the client device, and wherein the determining unit is configured to determine at least one of a position and size of the field of view relative to the obtained video content.

4. Server device according to any one of the preceding claims, wherein the determining unit is configured to:

- estimate at least one of a position and size of the field of view based on at least one of the received field of view command information, at least one position and/or size of one or more previously determined field of views, and an estimated movement of a user of the client device; and to
- generate field of view metadata regarding the estimated position and/or size of the field of view.

5. Server device according to any one of the preceding claims, further comprising:

- a segmentation unit configured to divide the obtained video image and the hitherto accumulated client panorama image in corresponding segments, such that for each segment in the video image a corresponding segment is present in the hitherto accumulated client panorama image;
- a segment comparing unit configured to compare corresponding segments and to determine a segment similarity; and
- a segment correcting unit configured to perform a correction to the respective segment in the hitherto accumulated client panorama image if the corresponding segment similarity is below a predefined similarity threshold; and wherein:

- the encoding unit is configured to encode the correction to the respective segment;
- the decoding unit is configured to decode the encoded correction to the respective segment;
- the combination unit is configured to determine the combination image by performing the decoded correction to the respective segment in the hitherto accumulated client panorama image; and
- the sending unit is configured to send the encoded correction to the client device.

6. Server device according to claim 5, wherein:

- the segment correcting unit is configured to perform the correction to the respective segment by replacing the segment of the hitherto accumulated client panorama image with the corresponding segment of the video image when the determined segment similarity is below a predefined replacement threshold;
- the encoding unit is configured to encode the corresponding segment of the video image;
- the decoding unit is configured to decode the encoded corresponding segment of the video image;
- the combination unit is configured to determine the combination image by including the decoded corresponding segment of the video image in the hitherto accumulated client panorama image; and
- the sending unit is configured to send the encoded corresponding segment of the video image to the client device.

7.  Server device according to claim 5 or 6, wherein:

- the segment correcting unit is configured to perform the correction to the respective segment by performing a color correction to the segment of the hitherto accumulated client panorama image when the determined segment similarity is below a predefined color threshold;
- the encoding unit is configured to encode the color correction to the respective segment;
- the decoding unit is configured to decode the encoded color correction to the respective segment;
- the combination unit is configured to determine the combination image by performing the decoded color correction to the respective segment in the hitherto accumulated client panorama image; and
- the sending unit is configured to send the encoded color correction to the client device.

8.  Server device according to claim 7, wherein

- the segment correcting unit is configured to perform a color correction to the respective segment by determining a color correction matrix such that multiplication of the respective segment with said color correction matrix results in a corrected respective segment;
- the encoding unit is configured to encode the determined color correction matrix;
- the decoding unit is configured to decode the encoded color correction matrix;
- the combination unit is configured to determine the combination image by multiplying the respective segment with the decoded color correction matrix in the hitherto accumulated client panorama image; and
- the sending unit is configured to send the encoded color correction matrix to the client device.

9.  Client device for receiving and rendering encoded video content from a server device, the client device comprising:

- a sending unit configured to send field of view command information to the server device;
- a receiving unit configured to receive an encoded field of view image and generated field of view metadata from the server device;
- a decoding unit configured to decode the encoded field of view image;
- a combination unit configured to determine a combination image by combining the field of view image with a hitherto accumulated client panorama image based on the generated field of view metadata;
- a storing unit configured to store the determined combination image as an updated hitherto accumulated client panorama image; and
- a rendering unit configured to render the determined combination image.

10. Client device according to claim 9, wherein the encoded field of view image is an adapted field of view image and wherein the combination unit is configured to determine a combination image by combining the adapted field of view image with the hitherto accumulated client panorama image based on the generated field of view metadata.

11. Client device according to claim 9 or 10, wherein:

- the receiving unit is configured to receive an encoded correction from the server device;
- the decoding unit is configured to decode the encoded correction; and
- the combination unit is configured to determine the combination image by performing the decoded correction to the respective segment in the hitherto accumulated client panorama image.

12. Client device according to claim 11, wherein:

- the receiving unit is configured to receive an encoded corresponding segment of the video image from the server device;
- the decoding unit is configured to decode the encoded corresponding segment of the video image; and
- the combination unit is configured to determine the combination image by including the decoded corresponding segment of the video image in the hitherto accumulated client panorama image.

**13.** Client device according to claim 11 or 12, wherein:

- the receiving unit is configured to receive an encoded color correction from the server device;
- the decoding unit is configured to decode the encoded color correction; and
- the combination unit is configured to determine the combination image by performing the decoded color correction to the respective segment in the hitherto accumulated client panorama image.

**14.** Client device according to claim 13, wherein:

- the receiving unit is configured to receive an encoded color correction matrix from the server device;
- the decoding unit is configured to decode the encoded color correction matrix; and
- the combination unit is configured to determine the combination image by multiplying the respective segment with the decoded color correction matrix in the hitherto accumulated client panorama image.

**15.** Video streaming assembly comprising a server device according to any one of the claims 1 to 8 in cooperation with a client device according to any one of the claims 8 to 14.


**Patentansprüche**

**1.** Servervorrichtung zum Streamen von codiertem Videoinhalt zu einer Clientvorrichtung, wobei die Servervorrichtung umfasst:

- eine Videobilderhaltenseinheit, die dazu ausgelegt ist, aus dem Videoinhalt ein Videobild zu erhalten;
- eine Informationsempfangseinheit, die dazu ausgelegt ist, von der Clientvorrichtung Sichtfeldbefehlsinformationen zu empfangen;
- eine Bestimmungseinheit, die dazu ausgelegt ist, ein Sichtfeld basierend auf den Sichtfeldbefehlsinformationen zu bestimmen und Metadaten des Sichtfeldes bezüglich des bestimmten Sichtfeldes zu erzeugen;
- eine Extraktionseinheit, die dazu ausgelegt ist, ein Sichtfeld-Bild aus dem erhaltenen Videobild basierend auf dem bestimmten Sichtfeld zu extrahieren;
- eine Codiereinheit, die dazu ausgelegt ist, das extrahierte Sichtfeld-Bild zu codieren;
- eine Decodiereinheit, die dazu ausgelegt ist, das codierte Sichtfeld-Bild zu decodieren;
- eine Kombinationseinheit, die dazu ausgelegt ist, ein Kombinationsbild durch Kombinieren des decodierten Sichtfeldbildes mit einem bisher kumulierten Clientpanoramabild zu bestimmen;
- eine Speichereinheit, die dazu ausgelegt ist, das bestimmte Kombinationsbild als ein aktualisiertes, bisher kumuliertes Clientpanoramabild zu speichern; und
- eine Sendeeinheit, die dazu ausgelegt ist, das codierte Sichtfeld-Bild und die erzeugten Sichtfeld-Metadaten an die Clientvorrichtung zu senden.

**2.** Servervorrichtung nach Anspruch 1, ferner umfassend eine Vergleichseinheit, die dazu ausgelegt ist, das extrahierte Sichtfeld-Bild mit einem entsprechenden Abschnitt des bisher kumulierten Clientpanoramabildes zu vergleichen und ein angepasstes Sichtfeld-Bild basierend auf einer Differenz zwischen dem extrahierten Sichtfeld-Bild und dem entsprechenden Abschnitt des bisher kumulierten Clientpanoramabildes zu bestimmen, und wobei:

- die Codiereinheit dazu ausgelegt ist, das angepasste Sichtfeld-Bild zu codieren;
- die Decodiereinheit dazu ausgelegt ist, das codierte angepasste Sichtfeld-Bild zu decodieren;
- die Kombinationseinheit dazu ausgelegt ist, ein Kombinationsbild durch Kombinieren des decodierten adaptierten Sichtfeldbildes mit dem bisher kumulierten Clientpanoramabild zu bestimmen;
- die Speichereinheit dazu ausgelegt ist, das bestimmte Kombinationsbild als ein aktualisiertes, bisher kumuliertes Clientpanoramabild zu speichern; und
- die Sendeeinheit dazu ausgelegt ist, das codierte angepasste Sichtfeld-Bild und die erzeugten Sichtfeld-Metadaten an die Clientvorrichtung zu senden.

3. Servervorrichtung nach Anspruch 1 oder 2, wobei das Sichtfeld einem Abschnitt des erhaltenen Videoinhalts entspricht, der von einem Benutzer der Clientvorrichtung sichtbar ist, und wobei die Bestimmungseinheit dazu ausgelegt ist, eine Position und/oder Größe des Sichtfeldes relativ zu dem erhaltenen Videoinhalt zu bestimmen.

4. Servervorrichtung nach einem der vorhergehenden Ansprüche, wobei die Bestimmungseinheit dazu ausgelegt ist:

- eine Position und/oder Größe des Sichtfeldes basierend auf mindestens einer der empfangenen Sichtfeldbefehlsinformationen, mindestens einer Position und/oder Größe eines oder mehrerer zuvor bestimmter Sichtfelder und einer geschätzten Bewegung eines Benutzers der Clientvorrichtung zu schätzen; und um
- Sichtfeld-Metadaten bezüglich der geschätzten Position und/oder Größe des Sichtfeldes zu erzeugen.

5. Servervorrichtung nach einem der vorhergehenden Ansprüche ferner umfassend:

- eine Segmentierungseinheit, die dazu ausgelegt ist, das erhaltene Videobild und das bisher kumulierte Clientpanoramabild in entsprechende Segmente zu unterteilen, so dass für jedes Segment im Videobild ein entsprechendes Segment im bisher kumulierten Clientpanoramabild vorhanden ist;
- eine Segmentvergleichseinheit, die dazu ausgelegt ist, entsprechende Segmente zu vergleichen und eine Segmentähnlichkeit zu bestimmen; und
- eine Segmentkorrektureinheit, die dazu ausgelegt ist, eine Korrektur an dem jeweiligen Segment im bisher kumulierten Clientpanoramabild durchzuführen, wenn die entsprechende Segmentähnlichkeit unter einem vordefinierten Ähnlichkeitsschwellenwert liegt; und wobei:

  - die Codiereinheit dazu ausgelegt ist, die Korrektur in das jeweilige Segment zu codieren;
  - die Decodiereinheit dazu ausgelegt ist, die codierte Korrektur für das jeweilige Segment zu decodieren;
  - die Kombinationseinheit dazu ausgelegt ist, das Kombinationsbild durch Durchführen der decodierten Korrektur an dem jeweiligen Segment im bisher kumulierten Clientpanoramabild zu bestimmen; und
  - die Sendeeinheit dazu ausgelegt ist, die codierte Korrektur an die Clientvorrichtung zu senden.

6. Servervorrichtung nach Anspruch 5, wobei:

- die Segmentkorrektureinheit dazu ausgelegt ist, die Korrektur an dem jeweiligen Segment durch Ersetzen des Segments des bisher kumulierten Clientpanoramabildes durch das entsprechende Segment des Videobildes durchzuführen, wenn die bestimmte Segmentähnlichkeit unterhalb eines vordefinierten Ersetzungsschwellenwerts liegt;
- die Codiereinheit dazu ausgelegt ist, das entsprechende Segment des Videobildes zu codieren;
- die Decodiereinheit dazu ausgelegt ist, das codierte entsprechende Segment des Videobildes zu decodieren;
- die Kombinationseinheit dazu ausgelegt ist, das Kombinationsbild durch Einbeziehen des decodierten entsprechenden Segments des Videobildes in das bisher kumulierte Clientpanoramabild zu bestimmen; und
- die Sendeeinheit dazu ausgelegt ist, das codierte entsprechende Segment des Videobildes an die Clientvorrichtung zu senden.

7. Servervorrichtung nach Anspruch 5 oder 6 wobei:

- die Segmentkorrektureinheit dazu ausgelegt ist, die Korrektur an dem jeweiligen Segment durch Durchführen einer Farbkorrektur an dem Segment des bisher kumulierten Clientpanoramabildes durchzuführen, wenn die bestimmte Segmentähnlichkeit unterhalb eines vordefinierten Farbschwellenwerts liegt;
- die Codiereinheit dazu ausgelegt ist, die Farbkorrektur in das jeweilige Segment zu codieren;
- die Decodiereinheit dazu ausgelegt ist, die codierte Farbkorrektur in das jeweilige Segment zu decodieren;
- die Kombinationseinheit dazu ausgelegt ist, das Kombinationsbild durch Durchführen der decodierten Farbkorrektur an dem jeweiligen Segment im bisher kumulierten Clientpanoramabild zu bestimmen; und
- die Sendeeinheit dazu ausgelegt ist, die codierte Farbkorrektur an die Clientvorrichtung zu senden.

8. Servervorrichtung nach Anspruch 7, wobei

- die Segmentkorrektureinheit dazu ausgelegt ist, eine Farbkorrektur an dem jeweiligen Segment durch Bestimmen einer Farbkorrekturmatrix durchzuführen, so dass die Multiplikation des jeweiligen Segments mit der Farbkorrekturmatrix zu einem korrigierten jeweiligen Segment führt;
- die Codiereinheit dazu ausgelegt ist, die bestimmte Farbkorrekturmatrix zu codieren;

- die Decodiereinheit dazu ausgelegt ist, die codierte Farbkorrekturmatrix zu decodieren;
- die Kombinationseinheit dazu ausgelegt ist, das Kombinationsbild durch Multiplizieren des jeweiligen Segments mit der decodierten Farbkorrekturmatrix in dem bisher kumulierten Clientpanoramabild zu bestimmen; und
- die Sendeeinheit dazu ausgelegt ist, die codierte Farbkorrekturmatrix an die Clientvorrichtung zu senden.

9. Clientvorrichtung zum Empfangen und Rendern von codiertem Videoinhalt von einer Servervorrichtung, wobei die Clientvorrichtung umfasst:

- eine Sendeeinheit, die dazu ausgelegt ist, Sichtfeldbefehlsinformationen an die Servervorrichtung zu senden;
- eine Empfangseinheit, die dazu ausgelegt ist, ein codiertes Sichtfeld-Bild und erzeugte Sichtfeld-Metadaten von der Servervorrichtung zu empfangen;
- eine Decodiereinheit, die dazu ausgelegt ist, das codierte Sichtfeld-Bild zu decodieren;
- eine Kombinationseinheit, die dazu ausgelegt ist, ein Kombinationsbild durch Kombinieren des Sichtfeldbildes mit einem bisher kumulierten Clientpanoramabild basierend auf den erzeugten Sichtfeld-Metadaten zu bestimmen;
- eine Speichereinheit, die dazu ausgelegt ist, das bestimmte Kombinationsbild als ein aktualisiertes, bisher kumuliertes Clientpanoramabild zu speichern; und
- eine Renderingeinheit, die dazu ausgelegt ist, das bestimmte Kombinationsbild zu rendern.

10. Clientvorrichtung nach Anspruch 9, wobei das codierte Sichtfeld-Bild ein angepasstes Sichtfeld-Bild ist und wobei die Kombinationseinheit dazu ausgelegt ist, ein Kombinationsbild durch Kombinieren des angepassten Sichtfeldbildes mit dem bisher kumulierten Clientpanoramabild basierend auf den erzeugten Sichtfeld-Metadaten zu bestimmen.

11. Clientvorrichtung nach Anspruch 9 oder 10, wobei:

- die Empfangseinheit dazu ausgelegt ist, eine codierte Korrektur von der Servervorrichtung zu empfangen;
- die Decodiereinheit dazu ausgelegt ist, die codierte Korrektur zu decodieren; und
- die Kombinationseinheit dazu ausgelegt ist, das Kombinationsbild durch Durchführen der decodierten Korrektur an dem jeweiligen Segment im bisher kumulierten Clientpanoramabild zu bestimmen.

12. Clientvorrichtung nach Anspruch 11, wobei:

- die Empfangseinheit dazu ausgelegt ist, ein codiertes entsprechendes Segment des Videobildes von der Servervorrichtung zu empfangen;
- die Decodiereinheit dazu ausgelegt ist, das codierte entsprechende Segment des Videobildes zu decodieren; und
- die Kombinationseinheit dazu ausgelegt ist, das Kombinationsbild durch Einbeziehen des decodierten entsprechenden Segments des Videobildes in das bisher kumulierte Clientpanoramabild zu bestimmen.

13. Clientvorrichtung nach Anspruch 11 oder 12, wobei:

- die Empfangseinheit dazu ausgelegt ist, eine codierte Farbkorrektur von der Servervorrichtung zu empfangen;
- die Decodiereinheit dazu ausgelegt ist die codierte Farbkorrektur zu decodieren; und
- die Kombinationseinheit dazu ausgelegt ist, das Kombinationsbild durch Durchführen der decodierten Farbkorrektur an dem jeweiligen Segment im bisher kumulierten Clientpanoramabild zu bestimmen.

14. Clientvorrichtung nach Anspruch 13, wobei:

- die Empfangseinheit dazu ausgelegt ist, eine codierte Farbkorrekturmatrix von der Servervorrichtung zu empfangen;
- die Decodiereinheit dazu ausgelegt ist, die codierte Farbkorrekturmatrix zu decodieren; und
- die Kombinationseinheit dazu ausgelegt ist, das Kombinationsbild durch Multiplizieren des jeweiligen Segments mit der decodierten Farbkorrekturmatrix in dem bisher kumulierten Clientpanoramabild zu bestimmen.

15. Video-Streaming-Anordnung umfassend eine Servervorrichtung nach einem der Ansprüche 1 bis 8 in Zusammenarbeit mit einer Clientvorrichtung nach einem der Ansprüche 8 bis 14.

**Revendications**

1. Dispositif serveur destiné à diffuser en continu un contenu vidéo codé vers un dispositif client, le dispositif serveur comprenant :

   - une unité d'obtention d'image vidéo configurée pour obtenir, à partir du contenu vidéo, une image vidéo ;
   - une unité de réception d'informations configurée pour recevoir des informations de consigne de champ de vision en provenance du dispositif client ;
   - une unité de détermination configurée pour déterminer un champ de vision d'après les informations de consigne de champ de vision, et pour générer des métadonnées de champ de vision concernant le champ de vision déterminé ;
   - une unité d'extraction configurée pour extraire une image de champ de vision de l'image vidéo obtenue d'après le champ de vision déterminé ;
   - une unité de codage configurée pour coder l'image de champ de vision extraite ;
   - une unité de décodage configurée pour décoder l'image de champ de vision codée ;
   - une unité de combinaison configurée pour déterminer une image combinée en combinant l'image de champ de vision décodée avec une image panoramique de client accumulée jusque-là ;
   - une unité de stockage configurée pour stocker l'image combinée déterminée en tant qu'image panoramique de client accumulée jusque-là actualisée ; et
   - une unité d'émission configurée pour envoyer l'image de champ de vision codée et les métadonnées de champ de vision générées au dispositif client.

2. Dispositif serveur selon la revendication 1, comprenant en outre une unité de comparaison configurée pour comparer l'image de champ de vision extraite à une section correspondante de l'image panoramique de client accumulée jusque-là, et pour déterminer une image de champ de vision adaptée d'après une différence entre l'image de champ de vision extraite et la section correspondante de l'image panoramique de client accumulée jusque-là, et :

   - l'unité de codage étant configurée pour coder l'image de champ de vision adaptée ;
   - l'unité de décodage étant configurée pour décoder l'image de champ de vision adaptée codée ;
   - l'unité de combinaison étant configurée pour déterminer une image combinée en combinant l'image de champ de vision adaptée décodée avec l'image panoramique de client accumulée jusque-là ;
   - l'unité de stockage étant configurée pour stocker l'image combinée déterminée en tant qu'image panoramique de client accumulée jusque-là actualisée ; et
   - l'unité d'émission étant configurée pour envoyer l'image de champ de vision adaptée codée et les métadonnées de champ de vision générées au dispositif client.

3. Dispositif serveur selon la revendication 1 ou 2, le champ de vision correspondant à une section du contenu vidéo obtenu, ladite section étant visualisable par un utilisateur du dispositif client, et l'unité de détermination étant configurée pour déterminer au moins une information parmi une position et une taille du champ de vision par rapport au contenu vidéo obtenu.

4. Dispositif serveur selon l'une quelconque des revendications précédentes, l'unité de détermination étant configurée pour :

   - estimer au moins une information parmi une position et une taille du champ de vision d'après au moins une information parmi les informations reçues de consigne de champ de vision, au moins une position et/ou une taille d'un ou plusieurs champs de vision déterminés auparavant, et un mouvement estimé d'un utilisateur du dispositif client ; et pour
   - générer des métadonnées de champ de vision concernant la position et/ou la taille estimées du champ de vision.

5. Dispositif serveur selon l'une quelconque des revendications précédentes, comprenant en outre :

   - une unité de segmentation configurée pour diviser l'image vidéo obtenue et l'image panoramique de client accumulée jusque-là en segments correspondants, de telle façon que pour chaque segment dans l'image vidéo un segment correspondant soit présent dans l'image panoramique de client accumulée jusque-là ;
   - une unité de comparaison de segments configurée pour comparer des segments correspondants et pour déterminer une similarité de segments ; et
   - une unité de correction de segments configurée pour effectuer une correction sur le segment considéré dans l'image panoramique de client accumulée jusque-là si la similarité des segments correspondants est inférieure à un seuil de similarité prédéfini ; et :

- l'unité de codage étant configurée pour coder la correction sur le segment considéré ;
- l'unité de décodage étant configurée pour décoder la correction codée sur le segment considéré ;
- l'unité de combinaison étant configurée pour déterminer l'image combinée en effectuant la correction décodée sur le segment considéré dans l'image panoramique de client accumulée jusque-là ; et
- l'unité d'émission étant configurée pour envoyer la correction codée au dispositif client.

6. Dispositif serveur selon la revendication 5 :

- l'unité de correction de segments étant configurée pour effectuer la correction sur le segment considéré en remplaçant le segment de l'image panoramique de client accumulée jusque-là par le segment correspondant de l'image vidéo lorsque la similarité de segments déterminée est inférieure à un seuil de remplacement prédéfini ;
- l'unité de codage étant configurée pour coder le segment correspondant de l'image vidéo ;
- l'unité de décodage étant configurée pour décoder le segment correspondant codé de l'image vidéo ;
- l'unité de combinaison étant configurée pour déterminer l'image combinée en incluant le segment correspondant décodé de l'image vidéo dans l'image panoramique de client accumulée jusque-là ; et
- l'unité d'émission étant configurée pour envoyer le segment correspondant codé de l'image vidéo au dispositif client.

7. Dispositif serveur selon la revendication 5 ou 6 :

- l'unité de correction de segments étant configurée pour effectuer la correction sur le segment considéré en effectuant une correction de couleur sur le segment de l'image panoramique de client accumulée jusque-là lorsque la similarité de segments déterminée est inférieure à un seuil de couleur prédéfini ;
- l'unité de codage étant configurée pour coder la correction de couleur sur le segment considéré ;
- l'unité de décodage étant configurée pour décoder la correction de couleur codée sur le segment considéré ;
- l'unité de combinaison étant configurée pour déterminer l'image combinée en effectuant la correction de couleur décodée sur le segment considéré dans l'image panoramique de client accumulée jusque-là ; et
- l'unité d'émission étant configurée pour envoyer la correction de couleur codée au dispositif client.

8. Dispositif serveur selon la revendication 7,

- l'unité de correction de segments étant configurée pour effectuer une correction de couleur sur le segment considéré en déterminant une matrice de correction de couleur telle que la multiplication du segment considéré par ladite matrice de correction de couleur donne un segment considéré corrigé ;
- l'unité de codage étant configurée pour coder la matrice de correction de couleur déterminée ;
- l'unité de décodage étant configurée pour décoder la matrice de correction de couleur codée ;
- l'unité de combinaison étant configurée pour déterminer l'image combinée en multipliant le segment considéré par la matrice de correction de couleur décodée dans l'image panoramique de client accumulée jusque-là ; et
- l'unité d'émission étant configurée pour envoyer la matrice de correction de couleur codée au dispositif client.

9. Dispositif client destiné à recevoir et à restituer un contenu vidéo codé en provenance d'un dispositif serveur, le dispositif client comprenant :

- une unité d'émission configurée pour envoyer informations de consigne de champ de vision au dispositif serveur ;
- une unité de réception configurée pour recevoir une image de champ de vision codée et des métadonnées de champ de vision générées en provenance du dispositif serveur ;
- une unité de décodage configurée pour décoder l'image de champ de vision codée ;
- une unité de combinaison configurée pour déterminer une image combinée en combinant l'image de champ de vision avec une image panoramique de client accumulée jusque-là d'après les métadonnées de champ de vision générées ;
- une unité de stockage configurée pour stocker l'image combinée déterminée en tant qu'image panoramique de client accumulée jusque-là actualisée ; et
- une unité de restitution configurée pour restituer l'image combinée déterminée.

**10.** Dispositif client selon la revendication 9, l'image de champ de vision codée étant une image de champ de vision adaptée et l'unité de combinaison étant configurée pour déterminer une image combinée en combinant l'image de champ de vision adaptée avec l'image panoramique de client accumulée jusque-là d'après les métadonnées de champ de vision générées.

**11.** Dispositif client selon la revendication 9 ou 10 :

- l'unité de réception étant configurée pour recevoir une correction codée en provenance du dispositif serveur ;
- l'unité de décodage étant configurée pour décoder la correction codée ; et
- l'unité de combinaison étant configurée pour déterminer l'image combinée en effectuant la correction décodée sur le segment considéré dans l'image panoramique de client accumulée jusque-là.

**12.** Dispositif client selon la revendication 11 :

- l'unité de réception étant configurée pour recevoir un segment correspondant codé de l'image vidéo en provenance du dispositif serveur ;
- l'unité de décodage étant configurée pour décoder le segment correspondant codé de l'image vidéo ; et
- l'unité de combinaison étant configurée pour déterminer l'image combinée en incluant le segment correspondant décodé de l'image vidéo dans l'image panoramique de client accumulée jusque-là.

**13.** Dispositif client selon la revendication 11 ou 12 :

- l'unité de réception étant configurée pour recevoir une correction codée de couleur en provenance du dispositif serveur ;
- l'unité de décodage étant configurée pour décoder la correction de couleur codée ; et
- l'unité de combinaison étant configurée pour déterminer l'image combinée en effectuant la correction de couleur décodée sur le segment considéré dans l'image panoramique de client accumulée jusque-là.

**14.** Dispositif client selon la revendication 13 :

- l'unité de réception étant configurée pour recevoir une matrice de correction de couleur codée en provenance du dispositif serveur ;
- l'unité de décodage étant configurée pour décoder la matrice de correction de couleur codée ; et
- l'unité de combinaison étant configurée pour déterminer l'image combinée en multipliant le segment considéré par la matrice de correction de couleur décodée dans l'image panoramique de client accumulée jusque-là.

**15.** Ensemble de diffusion de vidéo en continu comprenant un dispositif serveur selon l'une quelconque des revendications 1 à 8 en coopération avec un dispositif client selon l'une quelconque des revendications 8 à 14.

FIG. 1A

EP 3 515 082 B1

FIG. 1B

EP 3 515 082 B1

FIG. 2

FIG. 3

EP 3 515 082 B1

OBTAINING
VIDEO IMAGE
410

RECEIVING FOV
COMMAND
INFORMATION
420

430

DETERMINING
FIELD OF VIEW

440

EXTRACTING
FOV
IMAGE

450

ENCODING

SENDING
490

460

DECODING

470

COMBINING

480

STORING

## FIG. 4A

OBTAINING
VIDEO IMAGE — 410

RECEIVING FOV
COMMAND
INFORMATION — 420

DETERMINING
FIELD OF VIEW — 430

EXTRACTING
FOV
IMAGE — 440

COMPARING — 445

SENDING — 490

ENCODING — 450

COMBINING — 470

DECODING — 460

STORING — 480

FIG. 4B

32

FIG. 5

605 SENDING FOV INFORMATION TO SERVER

615 RECEIVING FOV IMAGE AND FOV METADATA

660 DECODING

670 COMBINING

680 SENDING

695 RENDERING

FIG. 6

EP 3 515 082 B1

FIG. 7

FIG. 8

FIG. 9

FIG. 10

FIG. 11

EP 3 515 082 B1

FIG. 11 continued

EP 3 515 082 B1

**FIG. 12**

EP 3 515 082 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PATRICE RONDAO ALFACE et al.** Interface Omni-directional Video Delivery: A Bandwidth-Effective Approach. *Bell Labs Technical Journal,* 01 March 2012, vol. 16 (4), 135-147